(19) **Europäisches Patentamt European Patent Office Office européen des brevets**

(11) **EP 4 700 685 A1**

(12) **EUROPEAN PATENT APPLICATION**
published in accordance with Art. 153(4) EPC

(43) Date of publication:
**25.02.2026 Bulletin 2026/09**

(21) Application number: **24823035.1**

(22) Date of filing: **27.02.2024**

(51) International Patent Classification (IPC):
***G06Q 30/0201*** (2023.01)

(52) Cooperative Patent Classification (CPC):
**G06Q 30/0201**

(86) International application number:
**PCT/JP2024/007128**

(87) International publication number:
**WO 2024/257412 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.06.2023 JP 2023096122**

(71) Applicant: **NTT DOCOMO, INC.**
**Tokyo 100-6150 (JP)**

(72) Inventors:
• **OCHIAI, Keiichi**
**Tokyo 100-6150 (JP)**
• **TERADA, Masayuki**
**Tokyo 100-6150 (JP)**
• **NAKAGAWA, Tomohiro**
**Tokyo 100-6150 (JP)**
• **HASEGAWA, Keita**
**Tokyo 100-6150 (JP)**
• **ONODA, Kasumi**
**Tokyo 100-6150 (JP)**
• **NOZAWA, Kazuma**
**Tokyo 100-6150 (JP)**

(74) Representative: **Viering, Jentschura & Partner mbB**
**Patent- und Rechtsanwälte**
**Am Brauhaus 8**
**01099 Dresden (DE)**

(54) **INFORMATION PROCESSING DEVICE AND INFORMATION SYSTEM**

(57)    An information processing device (100) that, when executing aggregation targeting an aggregation pattern including multiple combinations of data items contained in attribute information between the information processing device (100) itself and a counterpart device, both holding user data including a user ID and the attribute information related to a user, adds noise based on differential privacy criteria to aggregation results within a privacy budget, and executes the aggregation targeting the aggregation pattern, including: a relevance calculation unit (101) that calculates relevance between an index related to a purpose of data utilization and the data item contained in the attribute information; and a selection unit (102) that selects data items to be included in the aggregation pattern based on the calculated relevance.

**Fig.1**

EP 4 700 685 A1

**Description**

**Technical Field**

The present disclosure relates to an information processing device and an information system.

**Background Art**

By utilizing data held by multiple companies, it is expected to create value that cannot be obtained from data held by a single company. One method for realizing data utilization among multiple companies is to output aggregation results without mutually disclosing the data held by each company. In this case, by adding noise based on differential privacy criteria to the aggregation results within a predetermined privacy budget, it is possible to protect privacy information of the output data. Regarding the above privacy budget, Non-Patent Literature 1 below describes a technology for determining an allocation of a privacy budget in a differential privacy use case among multiple companies.

**Citation List**

**Non-Patent Literature**

[Non-Patent Literature 1] "Optimal distribution of privacy budget in differential privacy", Bkakria Anis et al., published on October 16, 2018

**Summary of Invention**

**Problems to be Solved by the Invention**

However, when realizing data utilization among multiple companies, there has been no examination or proposal regarding which data items should be linked to improve utility of the output statistical information. Furthermore, since the number of combinations of data among multiple companies are enormous, it is practically difficult to try aggregation for all of the combinations from a perspective of privacy budget limitations.

Therefore, the present disclosure aims to appropriately select data items to be linked in order to contribute to improving utility of statistical information output by data linkage in statistical data utilization among multiple companies.

**Solution to Problem**

An information processing device according to the present disclosure, when executing aggregation targeting an aggregation pattern including multiple combinations of data items contained in attribute information between the information processing device itself and a counterpart device, both holding user data including a user ID and the attribute information related to a user, adds noise based on differential privacy criteria to aggregation results within a privacy budget, and executes the aggregation targeting the aggregation pattern, including: a relevance calculation unit that calculates relevance between an index related to a purpose of data utilization and the data item contained in the attribute information; and a selection unit that selects data items to be included in the aggregation pattern based on the relevance calculated by the relevance calculation unit.

**Advantageous Effects of Invention**

According to the present disclosure, it is possible to appropriately select data items to be linked in order to contribute to improving utility of statistical information output by data linkage, in statistical data utilization among multiple companies.

**Brief Description of Drawings**

FIG. 1 is a functional block diagram of the information processing device in the first to fourth embodiments.

FIG. 2 is a diagram showing data examples in the first to third embodiments.

FIG. 3 is a flowchart showing processing executed in the first to fourth embodiments.

FIG. 4 is a diagram showing data examples in the fourth embodiment.

FIG. 5 is a functional block diagram of the information system in the fifth to sixth embodiments.

FIG. 6 is a diagram showing the configuration related to determination of an allocation of a privacy budget in the fifth embodiment.

FIG. 7 is a diagram showing the configuration related to aggregation processing in the fifth to sixth embodiments.

FIG. 8 is a flowchart showing processing executed in the fifth to sixth embodiments.

FIG. 9 is a flowchart showing processing related to determination of an allocation of a privacy budget in the fifth embodiment.

FIG. 10 is a diagram for explaining aggregation patterns.

FIG. 11 is a diagram for explaining the processing of steps S1 to S8 in FIG. 9.

FIG. 12 is a diagram for explaining data processing.

FIG. 13 is a diagram for explaining irreversible conversion of IDs.

FIG. 14 is a diagram for explaining encryption of IDs.

FIG. 15(a) is a diagram for explaining encryption of attribute information, and FIG. 15(b) is a diagram for explaining transmission/reception of encrypted IDs.

FIG. 16 is a diagram for explaining re-encryption of IDs.

FIG. 17 is a diagram for explaining matching of data.

FIG. 18 is a diagram for explaining the processing of steps S9 to S12 in FIG. 9.

FIG. 19 is a diagram for explaining the processing of steps S13 to S14 in FIG. 9.

FIG. 20 is a flowchart showing aggregation processing in the fifth to sixth embodiments.

FIG. 21 is a diagram for explaining irreversible conversion of IDs.

FIG. 22 is a diagram for explaining encryption of IDs.

FIG. 23(a) is a diagram for explaining encryption of attribute information, and FIG. 23(b) is a diagram for explaining transmission/reception of encrypted IDs.

FIG. 24 is a diagram for explaining re-encryption of IDs.

FIG. 25 is a diagram for explaining matching of data.

FIG. 26 is a diagram for explaining aggregation processing.

FIG. 27 is a diagram for explaining disclosure limitation processing.

FIG. 28 is a diagram for explaining decryption processing.

FIG. 29 is a diagram showing the configuration related to determination of an allocation of a privacy budget in the sixth embodiment.

FIG. 30 is a flowchart showing processing related to determination of an allocation of a privacy budget in the sixth embodiment.

FIG. 31 is a diagram for explaining the first example of the allocation of the privacy budget.

FIG. 32 is a diagram for explaining the second example of the allocation of the privacy budget.

FIG. 33 is a diagram showing the first example of output statistical information.

FIG. 34 is a diagram showing the second example of output statistical information.

FIG. 35 is a configuration diagram of an information system according to a modified example.

FIG. 36 is a diagram showing an example of hardware configuration of the information processing device.

**Description of Embodiments**

Hereinafter, the first to sixth embodiments according to the present disclosure will be described in order with reference to the drawings. The first to sixth embodiments are broadly classified into the first to fourth embodiments and the fifth to sixth embodiments. The former (first to fourth embodiments) will be described in detail up to the processing for selecting data items to be included in the aggregation pattern, and the latter (fifth to sixth embodiments) will be described in detail regarding determination of an allocation of a privacy budget and aggregation processing targeting the selected data items.

To outline each embodiment, the first embodiment is an embodiment in which the relevance between an index related to a purpose of data utilization (hereinafter referred to as "index") and data items is calculated based on a prediction model generated by supervised machine learning, and data items to be included in the aggregation pattern are selected based on the relevance. The second embodiment is an embodiment in which the relevance between the index and data items is calculated based on the correlation coefficient between the index and data items, and data items to be included in the aggregation pattern are selected based on the relevance. The third embodiment is an embodiment in which, for each category obtained by classifying each data item into multiple categories, the relevance between the index and the category is calculated, and data items to be included in the aggregation pattern are selected based on the number of categories with high relevance. The fourth embodiment is an embodiment in which, for each category obtained by classifying each data item into multiple categories, the relevance between the index and the category is calculated, and categories with high relevance are selected as data items to be included in the aggregation pattern. Furthermore, the fifth embodiment is an embodiment in which, in addition to selection of data items, determination of an allocation of a privacy budget (including calculation of basic values) and aggregation processing for aggregation patterns including the selected data items are executed. The sixth embodiment is an embodiment in which, in addition to selection of data items, determination of an allocation of a privacy budget (excluding calculation of basic values) and aggregation processing for aggregation patterns including the selected data items are executed.

[First Embodiment]

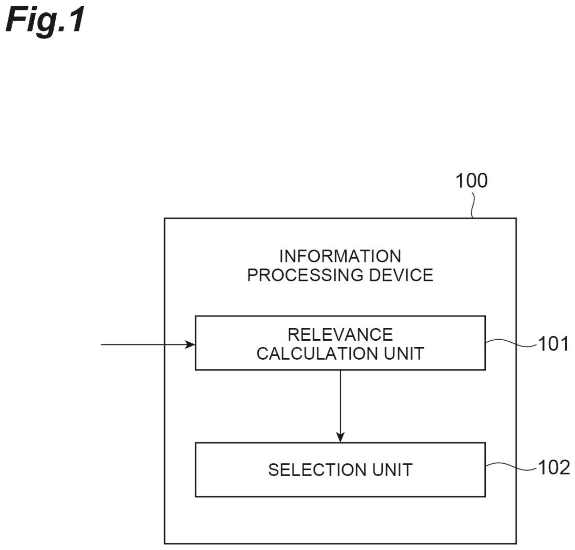

In the first embodiment, a purpose of data utilization is to increase sales volume of a predetermined target product, and it is assumed that data linkage is performed between companies (Company A and Company B) to increase the sales volume of the target product. In this data linkage, when executing aggregation targeting aggregation patterns including multiple combinations of data items contained in the attribute information of each user's attribute information between Company A and Company B, noise based on differential privacy criteria is added to the aggregation results within the privacy budget, and aggregation targeting the aggregation pattern is executed. The above purpose and assumption are the same in the second to sixth embodiments. In the first to fourth embodiments, as a preliminary processing step before data linkage, the processing up to selection of data items to be included in the aggregation pattern in the information processing device 100 of Company A shown in FIG. 1 will be described in detail.

As shown in FIG. 1, the information processing device 100 in the first embodiment includes, as characteristic components according to the present disclosure, a relevance calculation unit 101 that calculates relevance between an index related to the purpose of data utilization (increase in sales volume of the target product) and data items contained in attribute information, and a selection unit 102 that selects data items to be included in the aggregation pattern based on the calculated relevance. In the first embodiment, the relevance calculation unit 101 generates a prediction model of supervised machine learning using the index as the objective variable and the data item contained in attribute information as explanatory variables, and calculates the relevance based on the obtained prediction model.

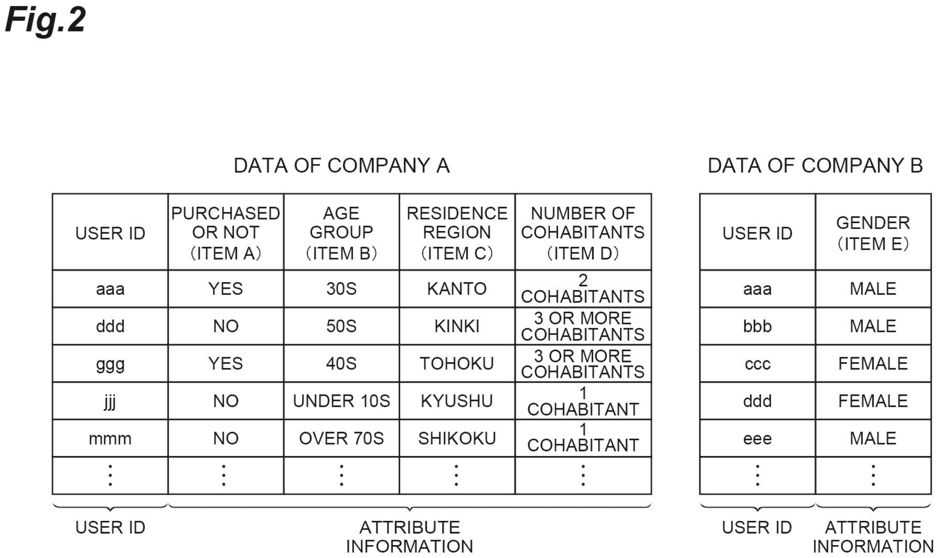

As shown in FIG. 2, the data of Company A includes a user ID for identifying a user and attribute information linked to the user ID. The attribute information includes "Product Purchase Status" indicating whether the target product was purchased, "Age Group" indicating the age group, "Residential Area" indicating the area of residence, and "Number of Cohabitants" indicating the number of people living together. Among these, "Product Purchase Status" is treated as an index related to the purpose of data utilization (increase in sales volume of the target product), and among the other data items ("Age Group", "Residential Area", and "Number of Cohabitants"), those with high relevance to "Product Purchase Status" are selected by the selection unit 102 as data items to be included in the aggregation pattern. In the data example of FIG. 2, "Product Purchase Status" includes two categories: "Purchased" and "Not Purchased"; "Age Group" includes seven categories: under teens, 20s, 30s, 40s, 50s, 60s, and 70s and above; "Residential Area" includes eight categories: Hokkaido, Tohoku, Kanto, Chubu, Kinki, Chugoku, Shikoku, and Kyushu; "Number of Cohabitants" includes three categories: 1 person, 2 persons, and 3 or more persons. For convenience of explanation, "Product Purchase Status", "Age Group", "Residential Area", and "Number of Cohabitants" may be referred to as "Item A", "Item B", "Item C", and "Item D", respectively. As will be described in the fifth to sixth embodiments, the data of Company B, which is the counterpart of Company A, includes a user ID and "Gender" as attribute information linked to the user ID. "Gender" includes two categories: male and female, and may be referred to as "Item E".

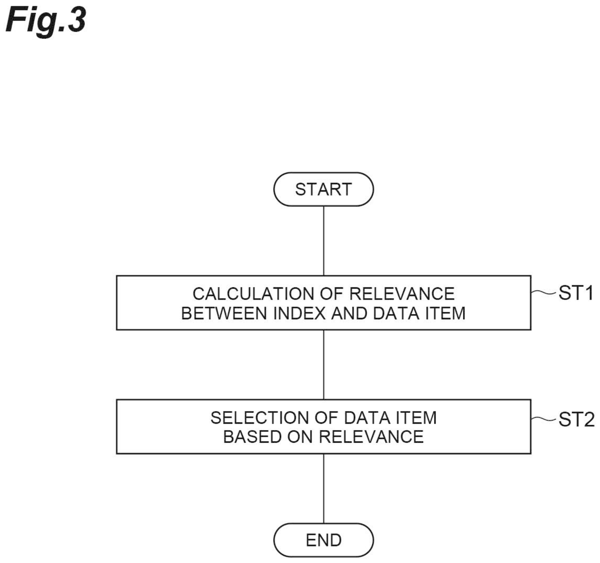

Next, the processing executed in the information processing device 100 will be described with reference to the flowchart in FIG. 3. First, the relevance calculation unit 101 calculates the relevance between the index related to the purpose of data utilization and the data item contained in attribute information (Step ST1). Specifically, the relevance calculation unit 101 generates a prediction model of supervised machine learning using the index as an objective variable and the data item contained in attribute information as an explanatory variable, and calculates the relevance based on the obtained prediction model. In the data example of FIG. 2, the relevance calculation unit 101 generates a prediction model to predict the index "Product Purchase Status" from "Age Group", "Residential Area", and "Number of Cohabitants". For example, using "Age Group", "Residential Area", and "Number of Cohabitants" as the explanatory variables (features) and "Product Purchase Status" as the objective variable (teacher data), a prediction model is generated using LightGBM (Light Gradient Boosting Machine), a model based on decision trees.

The learning method for the prediction model here may use the well-known method disclosed in the paper "LightGBM: A Highly Efficient Gradient Boosting Decision Tree" by Guolin Ke et al., Advances in Neural Information Processing Systems 30 (2017). As a result of learning, feature importance of each explanatory variable (feature) can be obtained and used as the relevance. For example, the relevance of "Age Group" $w_{age\ group}$ is "0.8", the relevance of "Residential Area" $w_{residential\ area}$ is "0.4", and the relevance of "Number of Cohabitants" $w_{number\ of\ cohabitants}$ is "0.6". Although the example here uses a model based on decision trees to generate the prediction model, various supervised machine learning methods capable of outputting feature importance, such as linear regression, support vector machines, and random forests, may be used to generate the prediction model.

Next, the selection unit 102 selects data items to be included in the aggregation pattern based on the calculated relevance (Step ST2 in FIG. 3). As an example, the selection unit 102 may select a predetermined number (k) of data items with the highest relevance. For example, if k=2, the two data items with the highest relevance, "Age Group" and "Number of Cohabitants", are selected.

According to the first embodiment described above, by generating a prediction model of supervised machine learning using the index related to the purpose of data utilization as the objective variable and the data item contained in attribute information as the explanatory variable, and selecting data items to be included in the aggregation pattern based on the relevance calculated from the obtained prediction model, it is possible to more appropriately select the data items.


[Second Embodiment]

The second embodiment will be described below, in which the relevance between the index related to a purpose of data utilization and data items is calculated based on a correlation coefficient between the index and data items, and data items to be included in the aggregation pattern are selected based on the relevance. In the second embodiment, since the configuration of the information processing device 100 (FIG. 1) and the processing flow (FIG. 3) are the same as in the first embodiment, the details specific to the relevance calculation and selection processing in the second embodiment will be focused on.

The relevance calculation unit 101 calculates the correlation coefficient between the index "Product Purchase Status" and each of the data items "Age Group", "Residential Area", and "Number of Cohabitants", as the relevance (Step ST1 in FIG. 3). Among these, "Age Group" and "Number of Cohabitants" are quantitative variables, but "Residential Area" is a nominal scale, so here, the correlation ratio (an example of correlation coefficient) for all three variables as nominal scales is calculated as the relevance.

For a data item with a categories, and $n_i$ data in category i (i is an integer from 1 to a), the overall mean of "Product Purchase Status" for the data item is

[Equation 1]

$$\overline{x}$$

and the mean of "Product Purchase Status" in category i is

[Equation 2]

$$\overline{x}_i$$

and the j-th data in category i (j is an integer from 1 to $n_i$) indicating "Product Purchase Status" (1: Purchased, 0: Not Purchased) is $x_{ij}$, then the correlation ratio can be calculated by the following formula (1).

[Equation 3]

$$\frac{\displaystyle\sum_{i=1}^{a} n_i(\overline{x}_{i\cdot} - \overline{x})^2}{\displaystyle\sum_{i=1}^{a}\sum_{j=1}^{n_i}(x_{ij} - \overline{x})^2} \qquad (1)$$

In a case where all of the data items to be calculated for the correlation coefficient are not nominal scales but quantitative variables (numerical data), the Pearson correlation coefficient (an example of correlation coefficient) may be calculated as the relevance by a well-known method.

In Step ST1 of FIG. 3, for example, if the relevance of "Age Group" $w_{age\,group}$ is "0.8", the relevance of "Residential Area" $w_{residential\,area}$ is "0.4", and the relevance of "Number of Cohabitants" $w_{number\,of\,cohabitants}$ is "0.6", then in the next Step ST2, the selection unit 102 may select a predetermined number (k) of data items with the highest relevance, as in the first embodiment. For example, if k=2, the two data items with the highest relevance, "Age Group" and "Number of Cohabitants", are selected.

According to the second embodiment described above, by selecting data items to be included in the aggregation pattern based on the relevance calculated from the correlation coefficient between the index related to the purpose of data utilization and data items, it is possible to more appropriately select the data items.

[Third Embodiment]

The third embodiment will be described below, in which, for each category obtained by classifying each of the data items into multiple categories, the relevance between the index and the category is calculated, and data items to be included in the aggregation pattern are selected based on the number of categories with high relevance. In the third embodiment, since the configuration of the information processing device 100 (FIG. 1) and the processing flow (FIG. 3) are the same as in the first embodiment, the details specific to the relevance calculation and selection processing in the third embodiment will be focused on.

The relevance calculation unit 101 in the third embodiment generates a prediction model of supervised machine learning using the index related to the purpose of data utilization as an objective variable and the data item contained in attribute information as an explanatory variable, and calculates the relevance based on the obtained prediction model (Step ST1 in FIG. 3). For example, in the data example of FIG. 2, the relevance calculation unit 101 generates a prediction model using a linear regression model to predict the index "Product Purchase Status" from the data items "Age Group", "Residential Area", and "Number of Cohabitants". Specifically, each of "Age Group", "Residential Area", and "Number of Cohabitants" is represented by a one-hot vector (a vector in which only one item is "1" and the others are "0"; hereinafter referred to as "one-hot vector"), and "Product Purchase Status" is predicted by the following formula (2).

[Equation 4]

$$y = w_1 x_1 + w_2 x_2 + \cdots + w_{18} x_{18} + b \qquad (2)$$

In the formula (2), y is Product Purchase Status (1: Purchased, 0: Not Purchased), $x_1$ to $x_7$ are one-hot features of "Age Group", $x_8$ to $x_{15}$ are one-hot features of "Residential Area", $x_{16}$ to $x_{18}$ are one-hot features of "Number of Cohabitants", $w_j$ (j: 1 to 18) are weights for each feature x, and b is an intercept.

As a learning method, the weights $w_j$ (j: 1 to 18) for each feature x in the above model are learned so that the error between the prediction and the actual value shown by the following formula (3) is minimized based on past data.

[Equation 5]

$$\sum_{i=1}^{N} \left( y_i - \left( b + \sum_{j=1}^{18} w_j x_{i,j} \right) \right)^2 \qquad (3)$$

The weights that minimize the above error can be obtained by the least squares method. Although a linear regression model is shown here as an example, various supervised machine learning methods capable of outputting feature importance, such as support vector machines, decision trees, and random forests, may be used to generate the prediction model.

In Step ST1 of FIG. 3, for example, "Age Group: 60s" weight $w_6$ is "0.8", "Age Group: 50s" weight $w_5$ is "0.6", "Residential Area: Kanto" weight $w_{10}$ is "0.4", "Number of Cohabitants: 1 person" weight $w_{16}$ is "0.4", "Number of Cohabitants: 2 persons" weight $w_{17}$ is "0.4", and the other weights $w_j$ are "0.1", respectively, as obtained by learning. The features (categories) with larger weights $w_j$ have higher relevance to the index "Product Purchase Status" related to the purpose of data utilization.

Therefore, in the next Step ST2, the selection unit 102 identifies features (categories) with high relevance based on predetermined criteria, and selects data items to be included in the aggregation pattern based on the number of features (categories) with high relevance for each data item. As an example, the selection unit 102 identifies the top k features (categories) in descending order of weight $w_j$, and counts their occurrences for each of the data items (data items before one-hot vectorization). If k=5, "Age Group" is counted twice, "Residential Area" once, and "Number of Cohabitants" twice, so the data items with the highest occurrence count, "Age Group" and "Number of Cohabitants", are selected as data items to be included in the aggregation pattern.

According to the third embodiment described above, by calculating the relevance for each category obtained by classifying each data item into multiple categories and selecting data items to be included in the aggregation pattern based on the number of categories with high relevance counted by a predetermined method, it is possible to more appropriately select the data items.

Note that, regarding the occurrence count, data items with a larger number of vector dimensions (i.e., number of categories included in the data item) after one-hot vectorization are more likely to be selected. Therefore, as a modified example of the third embodiment, data items to be included in the aggregation pattern may be selected based on a ratio obtained by dividing the occurrence count for each data item by the number of vector dimensions. In the above example, for "Age Group", the ratio is 2/7=0.285; for "Residential Area", the ratio is 1/8=0.125; for "Number of Cohabitants", the ratio is 2/3=0.666. Then, the data item with the highest ratio, "Number of Cohabitants", is selected as the data item to be included in the aggregation pattern. In this way, it is possible to more appropriately select data items to be included in the aggregation pattern, taking into account the difference in the number of vector dimensions (number of categories) for each data item.

Also, in the third embodiment, like the first embodiment, a prediction model of supervised machine learning is generated and the relevance is calculated based on the obtained prediction model, but a method of calculating the correlation coefficient (e.g., the aforementioned correlation ratio) between the index and the data item as the relevance may be adopted as a method of relevance calculation, as per the second embodiment.

[Fourth Embodiment]

The fourth embodiment will be described below, in which, for each category obtained by classifying data items into multiple categories, the relevance between the index and the category is calculated, and categories with high relevance are selected as data items to be included in the aggregation pattern. In the fourth embodiment, since the configuration of the information processing device 100 (FIG. 1) and the processing flow (FIG. 3) are the same as in the first embodiment, the details specific to the relevance calculation and selection processing in the fourth embodiment will be focused on.

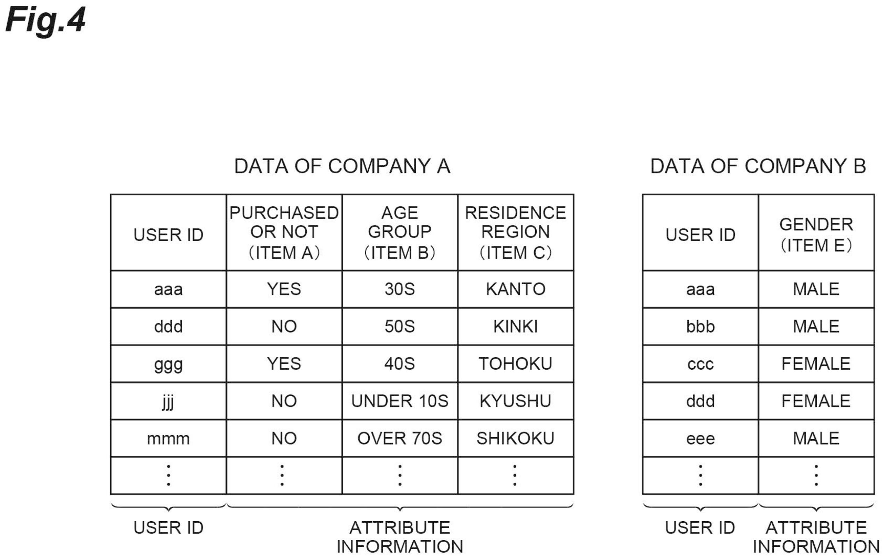

In the data example of the fourth embodiment shown in FIG. 4, "Product Purchase Status" includes two categories: "Purchased" and "Not Purchased"; "Age Group" includes seven categories: under teens, 20s, 30s, 40s, 50s, 60s, and 70s and above; "Residential Area" includes eight categories: Hokkaido, Tohoku, Kanto, Chubu, Kinki, Chugoku, Shikoku, and Kyushu. In the data of Company B, "Gender" includes two categories: male and female.

In the fourth embodiment, the relevance calculation unit 101 generates a prediction model of supervised machine learning using the index related to the purpose of data utilization as an objective variable and the data item contained in attribute information as an explanatory variable, and calculates the relevance based on the obtained prediction model (Step ST1 in FIG. 3).

In the data example of FIG. 4, the relevance calculation unit 101 generates a prediction model using a linear regression model to predict the index "Product Purchase Status" from the data items "Age Group" and "Residential Area". Specifically, each of "Age Group" and "Residential Area" is represented by a one-hot vector, and product purchase is predicted by the following formula (4).

[Equation 6]

$$y = w_1 x_1 + w_2 x_2 + \cdots + w_{15} x_{15} + b \qquad (4)$$

In the formula (4), y is Product Purchase Status (1: Purchased, 0: Not Purchased), $x_1$ to $x_7$ are one-hot features of "Age Group", $x_8$ to $x_{15}$ are one-hot features of "Residential Area", $w_j$ (j: 1 to 15) are weights for each feature x, and b is an intercept.

As a learning method, the weights $w_j$ (j: 1 to 15) for each feature in the above model are learned so that the difference between the prediction and the actual value shown by the following formula (5) is minimized based on past data.

[Equation 7]

$$\sum_{i=1}^{N} \left( y_i - \left( b + \sum_{j=1}^{15} w_j x_{i,j} \right) \right)^2 \qquad (5)$$

The weights that minimize the above error can be obtained by the least squares method. Although a linear regression model is shown here as an example, various supervised machine learning methods capable of outputting feature importance, such as support vector machines, decision trees, and random forests, may be used to generate the prediction model.

In Step ST1 of FIG. 3, for example, "Age Group: 60s" weight $w_6$ is "0.8", "Age Group: 50s" weight $w_5$ is "0.6", "Residential Area: Kanto" weight $w_{10}$ is "0.4", and the other weights $w_j$ are "0.1", respectively, as obtained by learning. The features (categories) with larger weights $w_j$ have higher relevance to the index "Product Purchase Status" related to the purpose of data utilization.

Therefore, in the next Step ST2, the selection unit 102 identifies features (categories) with high relevance based on predetermined criteria, and selects the identified features (categories) with high relevance as targets to be included in the aggregation pattern. For example, the selection unit 102 identifies the top k features (categories) in descending order of weight $w_j$, and selects the identified top k features (categories) as targets to be included in the aggregation pattern. If k=3, the top three features (categories) in descending order of weight $w_j$, "Age Group: 60s", "Age Group: 50s", and "Residential Area: Kanto", are selected as targets to be included in the aggregation pattern.

According to the fourth embodiment described above, by calculating the relevance for each category obtained by classifying each data item into multiple categories and selecting data items (here, features (categories)) to be included in the aggregation pattern based on the number of categories with high relevance counted by a predetermined method, it is possible to more appropriately select the data items.

Note that in the fourth embodiment, like the first embodiment, a prediction model of supervised machine learning is generated and the relevance is calculated based on the obtained prediction model, but a method of calculating the correlation coefficient (e.g., the aforementioned correlation ratio) between the index and the feature (category) as the relevance may be adopted as a method of relevance calculation, as per the second embodiment.

[Fifth Embodiment]

The fifth embodiment will be described below, in which, in addition to selection of data items as per the first to fourth embodiments, determination of an allocation of a privacy budget (including calculation of basic values) and aggregation processing for aggregation patterns including the selected data items are executed.

(5-1: System Configuration in the Fifth Embodiment)

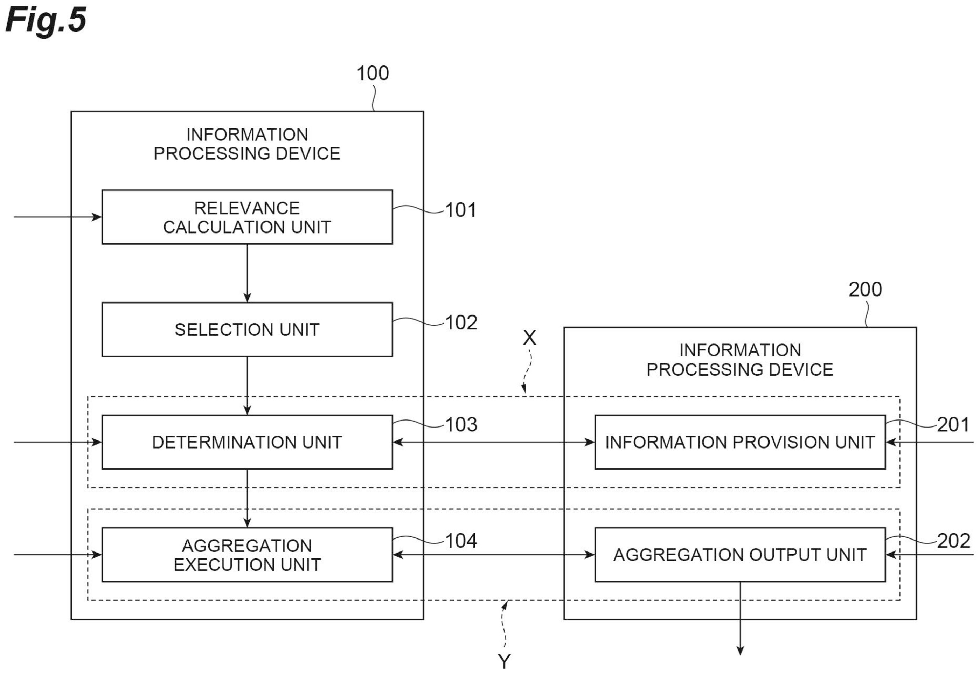

As shown in FIG. 5, in the system configuration of the fifth embodiment, Company A's information processing device 100 and Company B's information processing device 200 exist, and these information processing devices 100 and 200 cooperate to execute aggregation processing. Among these, Company A's information processing device 100 includes the relevance calculation unit 101 and the selection unit 102 described in the first to fourth embodiments.

Furthermore, Company A's information processing device 100, as a characteristic configuration in this embodiment, further includes a determination unit 103 that determines an allocation of a privacy budget to each combination including the data items selected by the selection unit 102, and an aggregation execution unit 104 that, for each combination, adds noise based on differential privacy criteria to the aggregation results within the allocated privacy budget determined based on the determined allocation, and executes aggregation targeting the aggregation pattern.

On the other hand, Company B's information processing device 200, as will be described in detail later, includes an information provision unit 201 that cooperates with Company A's determination unit 103 to provide information necessary for determination of the allocation of the privacy budget by the determination unit 103, and an aggregate output unit 202 that cooperates with Company A's aggregation execution unit 104 to provide information necessary for aggregation by the aggregation execution unit 104, and performs decryption and output of aggregation results.

That is, the configuration indicated by arrow X in FIG. 5 (determination unit 103 and information provision unit 201) has the function of determining the allocation of the privacy budget, and the configuration indicated by arrow Y (aggregation execution unit 104 and aggregate output unit 202) has the function of executing aggregation targeting the aggregation pattern and outputting aggregation results. As shown in FIG. 5, in the following, examples are shown in which the latest user data to be processed is input to and processed by the relevance calculation unit 101, the configuration indicated by arrow X, and the configuration indicated by arrow Y, but this is not essential, and the user data once input to the information processing devices 100 and 200 may be stored in a storage unit (not shown) and read from the storage unit for subsequent processing. The functions of the configuration indicated by arrow X and the configuration indicated by arrow Y will be described in order below.

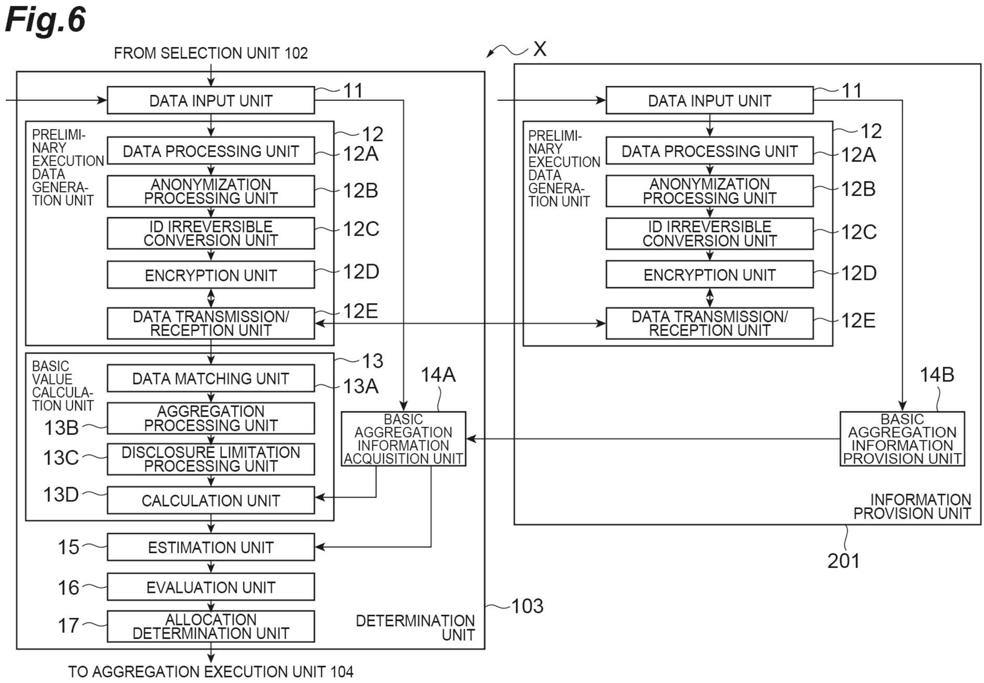

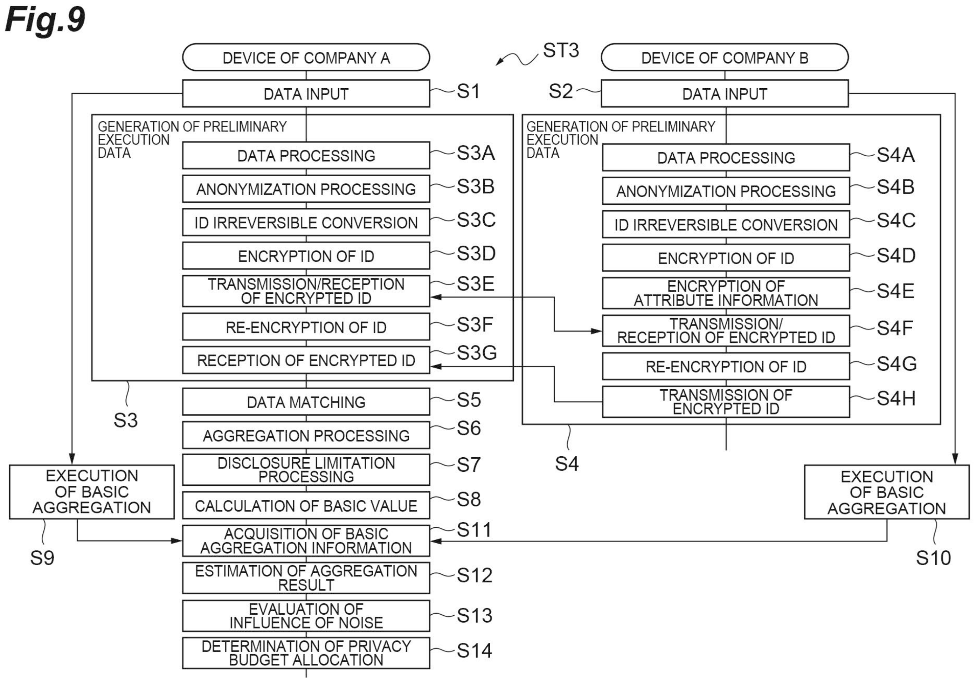

FIG. 6 shows the functional block configuration of the configuration indicated by arrow X in FIG. 5. As shown in FIG. 6, the determination unit 103 includes a data input unit 11, a preliminary execution data generation unit 12, a basic value calculation unit 13, a basic aggregation information acquisition unit 14A, an estimation unit 15, an evaluation unit 16, and an allocation determination unit 17, while the information provision unit 201 includes a data input unit 11, a preliminary execution data generation unit 12, and a basic aggregation information provision unit 14B. The functions of each unit will be outlined below, and details will be described later with reference to the flowchart in FIG. 9.

The data input unit 11 is a functional unit that receives input data from the outside, and is provided in common to Company A's determination unit 103 and Company B's information provision unit 201. However, the input data for both Company A and Company B is user data including a user ID and attribute information related to a user, but the content of the user data differs for each company. Specific examples of user data will be described later.

The preliminary execution data generation unit 12 is a functional unit that generates data (referred to as "preliminary execution data") for preliminary execution of test aggregation before the actual aggregation to calculate basic values such as the data matching rate between both companies, and is provided in common to Company A's determination unit 103 and Company B's information provision unit 201. The preliminary execution data generation unit 12 includes a data processing unit 12A that processes input data into small-scale data with limited data items for basic value calculation, an anonymization processing unit 12B that performs anonymization processing for privacy protection of attribute information in user data, an ID irreversible conversion unit 12C that performs irreversible conversion processing of user IDs in user data, an encryption unit 12D that encrypts user data, and a data transmission/reception unit 12E that transmits and receives encrypted user data.

The basic value calculation unit 13 is a functional unit that calculates basic values from preliminary execution data A generated by Company A's determination unit 103 and preliminary execution data B generated by Company B's information provision unit 201, and is provided in Company A's determination unit 103. The basic value calculation unit 13 includes a data matching unit 13A that matches preliminary execution data A and preliminary execution data B, an aggregation processing unit 13B that performs aggregation processing based on the matching results, a disclosure limitation processing unit 13C that performs disclosure limitation processing on the aggregation processing results, and a calculation unit 13D that calculates basic values from the aggregation processing results after disclosure limitation processing.

The basic aggregation information provision unit 14B is a functional unit provided in Company B's information provision unit 201, and calculates sample size and item-wise ratio, which are basic aggregation information of Company B's user data, and provides them to Company A's determination unit 103.

The basic aggregation information acquisition unit 14A is a functional unit provided in Company A's determination unit 103, and calculates sample size and item-wise ratio, which are basic aggregation information of Company A's user data, and also receives sample size and item-wise ratio, which are basic aggregation information of Company B's user data calculated by Company B's information provision unit 201, thereby acquiring basic aggregation information of both Company A and Company B.

The estimation unit 15 is a functional unit provided in Company A's determination unit 103, and estimates the sample size of aggregation results based on the basic aggregation information of both Company A and Company B acquired by the basic aggregation information acquisition unit 14A and the basic values calculated by the basic value calculation unit 13.

The evaluation unit 16 is a functional unit provided in Company A's determination unit 103, and quantitatively evaluates influence of noise for each combination included in the aggregation pattern based on the estimated sample size of aggregation results.

The allocation determination unit 17 is a functional unit provided in Company A's determination unit 103, and determines the allocation of privacy budget to each combination based on the evaluation results for each combination obtained by the evaluation unit 16.

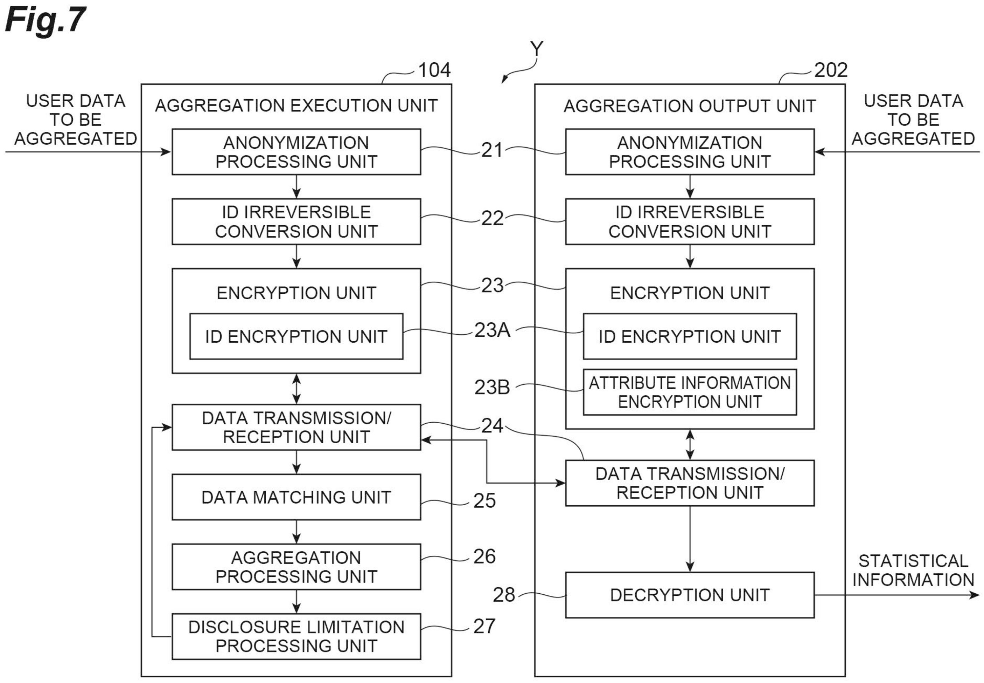

FIG. 7 shows the functional block configuration of the configuration indicated by arrow Y in FIG. 5. As shown in FIG. 7, the aggregation execution unit 104 includes an anonymization processing unit 21, an ID irreversible conversion unit 22, an encryption unit 23, a data transmission/reception unit 24, a data matching unit 25, an aggregation processing unit 26, and a disclosure limitation processing unit 27, while the aggregate output unit 202 includes an anonymization processing unit 21, an ID irreversible conversion unit 22, an encryption unit 23, a data transmission/reception unit 24, and a decryption unit 28. The functions of each unit will be described below.

The anonymization processing unit 21 is a functional unit provided in common to Company A's aggregation execution unit 104 and Company B's aggregate output unit 202, and performs privacy protection processing for attribute information in user data held by each of the information processing device 100 or 200 itself prior to encryption of user IDs. As privacy protection, for example, one or more of k-anonymity, l-diversity, and t-closeness may be adopted, and an example of k-anonymity will be described later.

The ID irreversible conversion unit 22 is a functional unit provided in common to Company A's aggregation execution unit 104 and Company B's aggregate output unit 202, and performs irreversible conversion processing of user IDs in user data held by each of the information processing device 100 or 200 itself prior to encryption of user IDs. The irreversible conversion processing includes hashing, and the ID irreversible conversion unit 22 performs hashing of user IDs and then discards the salt used in the hashing process.

The encryption unit 23 provided in Company A's aggregation execution unit 104 is a functional unit that encrypts user IDs in user data to be aggregated based on its own encryption key and key-based one-way commutative operation, thereby generating encrypted user data for aggregation, and includes an ID encryption unit 23A that performs this function.

In contrast, the encryption unit 23 provided in Company B's aggregate output unit 202 is a functional unit that encrypts user IDs in user data to be aggregated based on its own encryption key and key-based one-way commutative operation, and also encrypts attribute information in user data to be aggregated using a homomorphic encryption scheme that allows aggregation processing, thereby generating encrypted user data for aggregation, and includes an ID encryption unit 23A that encrypts user IDs and an attribute information encryption unit 23B that encrypts attribute information. The order of execution of encryption of user IDs and attribute information may be arbitrary.

The data transmission/reception unit 24 is a functional unit provided in common to Company A's aggregation execution unit 104 and Company B's aggregate output unit 202, and transmits and receives encrypted user data.

The data matching unit 25 is a functional unit provided in Company A's aggregation execution unit 104, and matches Company A's encrypted user data generated by the encryption unit 23 and Company B's encrypted user data based on the user ID correspondence part specified by predetermined structural information of user data.

The aggregation processing unit 26 is a functional unit provided in Company A's aggregation execution unit 104, and generates encrypted aggregate data for target users by counting the number of encrypted user data whose user ID correspondence part matches as a result of matching by the data matching unit 25. The counting method will be described later.

The disclosure limitation processing unit 27 is a functional unit provided in Company A's aggregation execution unit 104, and performs disclosure limitation processing on the encrypted aggregate data generated by the aggregation processing unit 26 to generate encrypted statistical information.

The decryption unit 28 is a functional unit provided in Company B's aggregate output unit 202, and decrypts the encrypted statistical information transmitted from Company A's aggregation execution unit 104 based on a decryption scheme corresponding to the encryption by the attribute information encryption unit 23B, and outputs the obtained statistical information to an external device.

(5-2: Processing Executed in the Fifth Embodiment)

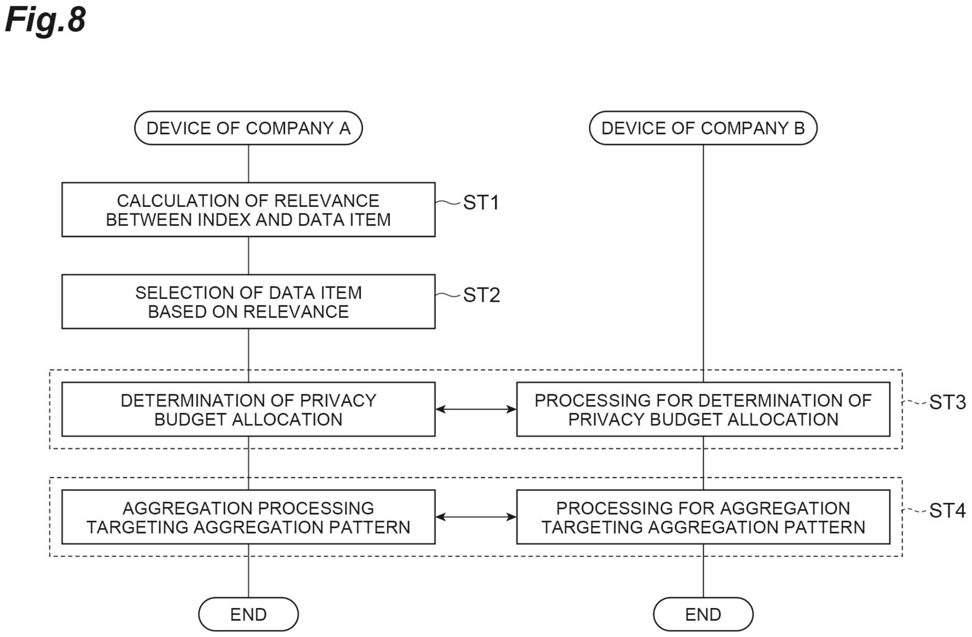

(5-2-1: Overview of Entire Process (Steps ST1 to ST4 in FIG. 8))

The processing executed in the fifth embodiment will be described below with reference to FIGS. 8 to 28. As shown in FIG. 8, in Company A's information processing device 100, the relevance calculation unit 101 calculates the relevance between the index related to the purpose of data utilization and data items (Step ST1), and the selection unit 102 selects data items to be included in the aggregation pattern based on the calculated relevance (Step ST2). Any of the processing described in the first to fourth embodiments may be executed in Steps ST1 to ST2.

After data items to be included in the aggregation pattern are selected, Company A's determination unit 103 and Company B's information provision unit 201 cooperate to execute determination of an allocation of the privacy budget as described below (Step ST3). Subsequently, Company A's aggregation execution unit 104 and Company B's aggregate output unit 202 cooperate to execute aggregation processing targeting the aggregation pattern as described later (Step ST4).

(5-2-2: Details of Step ST3 in FIG. 8 (Determination of Allocation of Privacy Budget))

Next, the details of Step ST3 in FIG. 8 (determination of the allocation of the privacy budget) will be described with reference to FIGS. 9 to 19.

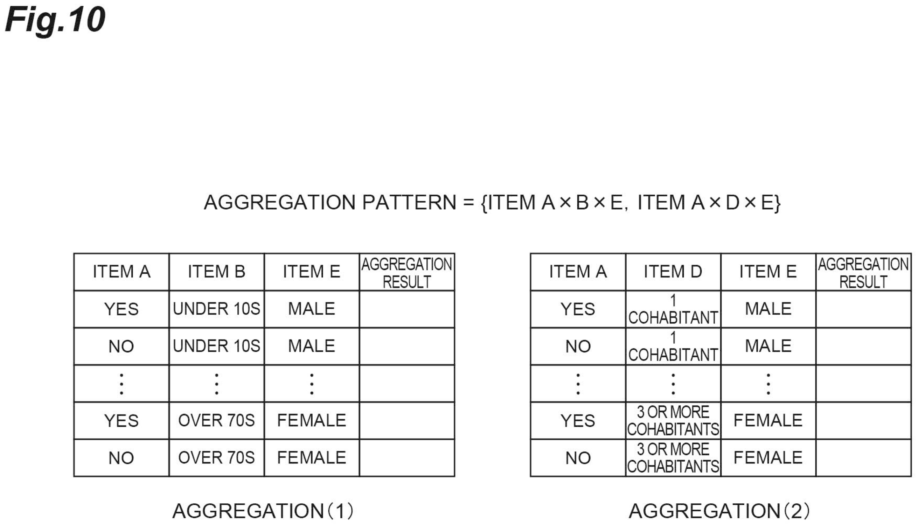

First, user data to be aggregated is input to the data input unit 11 in both Company A's determination unit 103 and Company B's information provision unit 201 (Steps S1 and S2 in FIG. 9). The data input to the determination unit 103 is Company A's data (user ID and Items A to D) as described in FIG. 2, and the data input to the information provision unit 201 is Company B's data (user ID and Item E) as described in FIG. 2. In this embodiment, the aggregation pattern is assumed to be two types: aggregation (1) for the combination of Items A, B, and E (hereinafter referred to as "Item $A \times B \times E$") and aggregation (2) for the combination of Items A, D, and E (hereinafter referred to as "Item $A \times D \times E$"), as shown in FIG. 10.

Next, the preliminary execution data generation unit 12 in both Company A's determination unit 103 and Company B's information provision unit 201 generates preliminary execution data (Steps S3 and S4 in FIG. 9). As shown in FIG. 9, the preliminary execution data generation processing includes multiple processing steps, which are broadly classified into data processing into small-scale data for basic value calculation (Steps S3A and S4A) and preliminary processing (Steps S3B to S3G and S4B to S4H) for matching data in a non-identifiable (anonymized, hashed) and encrypted state (Step S5).

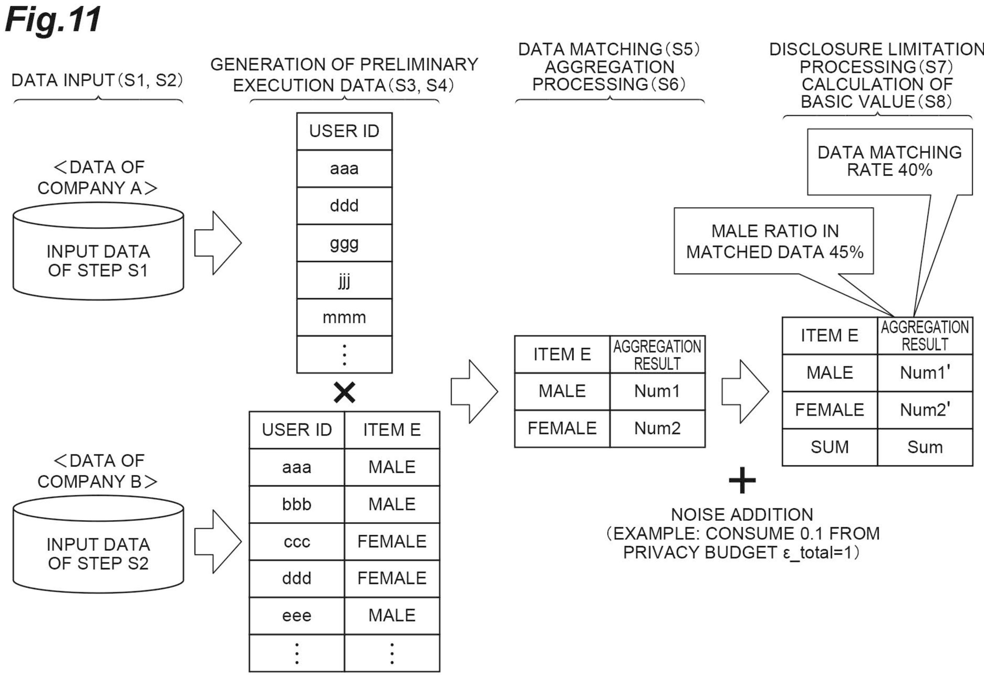

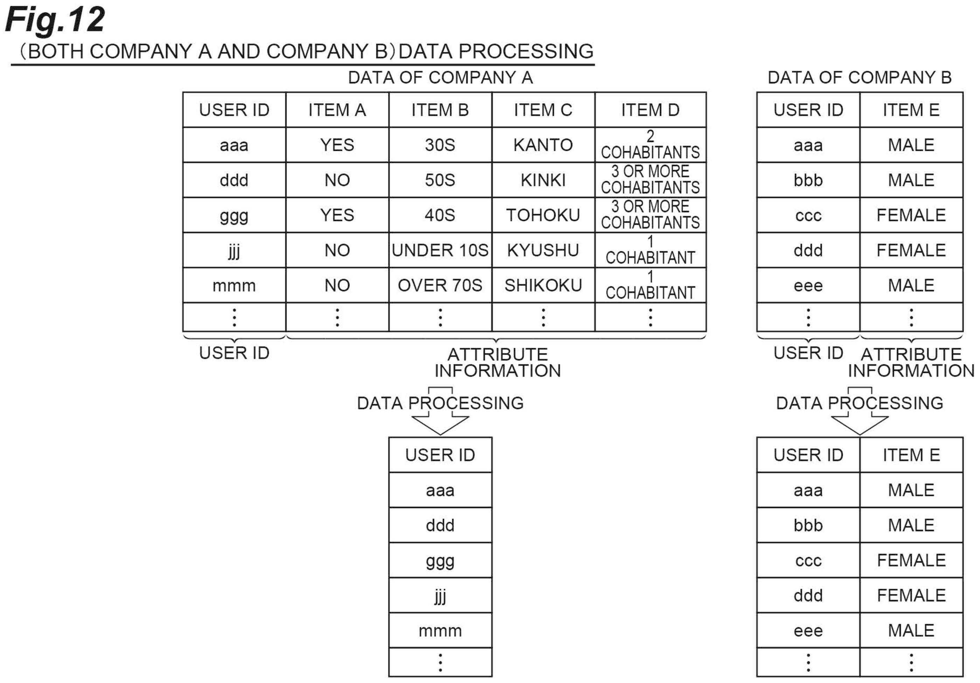

In the former, the data processing unit 12A in both Company A's determination unit 103 and Company B's information provision unit 201 processes input data into small-scale data for basic value calculation (Steps S3A and S4A). For example, in this embodiment, "Item E", which is common to both combinations of aggregation patterns (Item $A \times B \times E$ and Item $A \times D \times E$), is regarded as the main item, and the data is processed into small-scale data limited to Item E. As a result, as shown in FIGS. 11 and 12, Company A's data is processed into only user IDs, and Company B's data is processed into user IDs and Item E.

The latter "preliminary processing" includes anonymization processing, ID irreversible conversion, and ID encryption. In anonymization processing, the anonymization processing unit 12B in both Company A's determination unit 103 and Company B's information provision unit 201 performs anonymization processing for privacy protection of attribute information in user data held by each of the information processing device 100 or 200 itself (Steps S3B and S4B in FIG. 9). Here, k-anonymization is exemplified, in which user data is converted so that there are at least k user data with the same attribute information in the target user data, thereby reducing the probability of identifying individuals to 1/k or less. If there are fewer than k user data with the same attribute information in the attribute information of Company B's user data, the attribute information of user data with similar attribute information is converted so that there are at least k user data with the same attribute information.

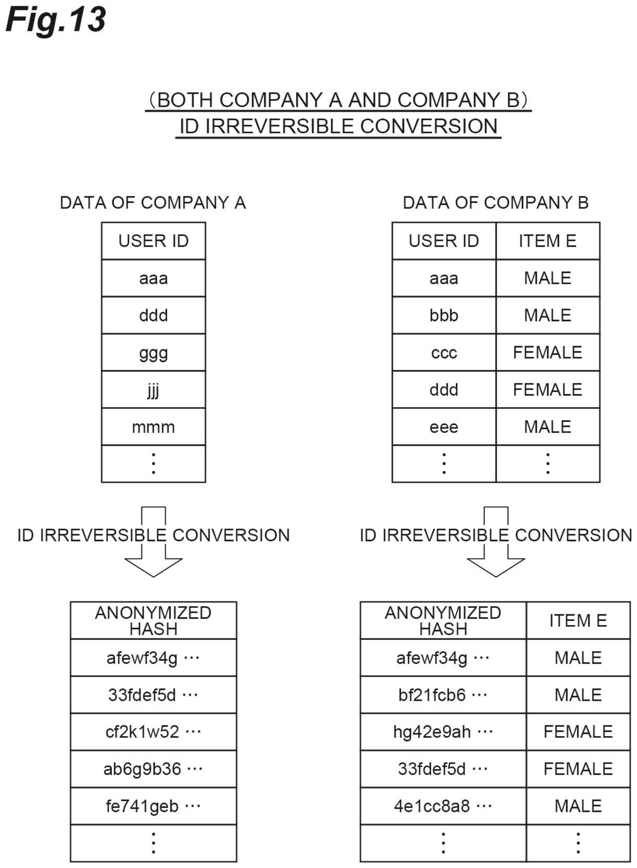

Next, as shown in FIG. 13, the ID irreversible conversion unit 12C in both Company A's determination unit 103 and Company B's information provision unit 201 performs irreversible conversion processing of user IDs in user data held by each of the information processing device 100 or 200 itself (Steps S3C and S4C). Specifically, the ID irreversible conversion unit 12C performs hashing of user IDs and then discards the salt used in the hashing process.

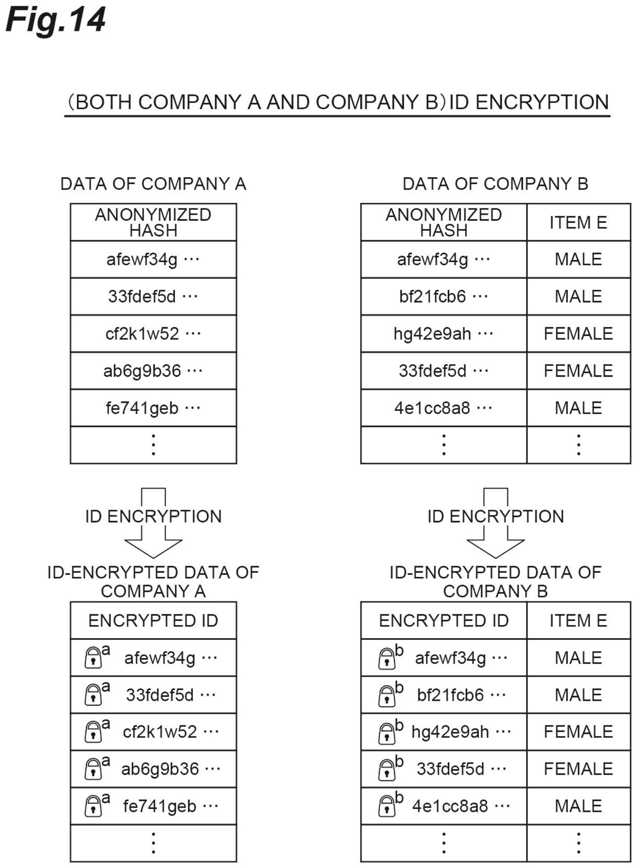

Next, as shown in FIG. 14, the encryption unit 12D in Company A's determination unit 103 encrypts the non-identifiable hash (user ID part in user data) with a pre-prepared secret key a to obtain Company A's encrypted ID data (Step S3D). Similarly, the encryption unit 12D in Company B's information provision unit 201 encrypts the non-identifiable hash (user ID part in user data) with a pre-prepared secret key b to obtain Company B's encrypted ID data (Step S4D).

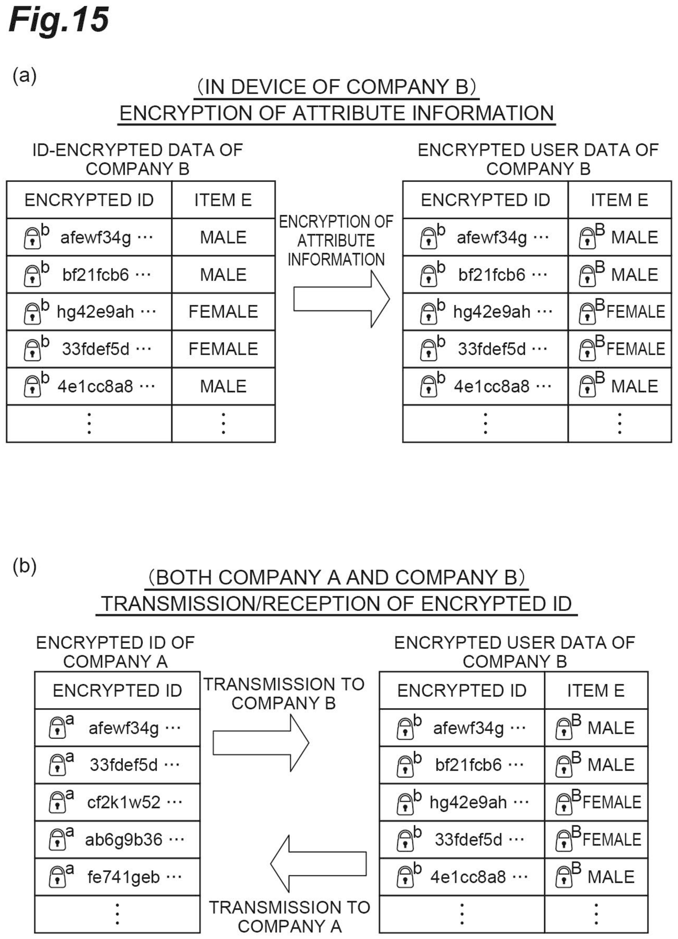

Next, as shown in FIG. 15(a), the encryption unit 12D in Company B's information provision unit 201 encrypts the attribute information in Company B's encrypted ID data obtained in Step S4D using a homomorphic encryption scheme that allows aggregation processing with a pre-prepared secret key B, thereby generating Company B's encrypted user data (Step S4E). Each attribute information in the generated encrypted user data is composed of a predetermined binary value format to allow aggregation processing in the encrypted state.

Next, as shown in FIG. 15(b), the data transmission/reception unit 12E in Company A's determination unit 103 transmits Company A's encrypted ID in Company A's encrypted ID data obtained in Step S3D to the data transmission/reception unit 12E in Company B's information provision unit 201 (Step S3E), and the data transmission/reception unit 12E in Company B's information provision unit 201 transmits Company B's encrypted user data (i.e., data including Company B's encrypted ID and encrypted attribute information) obtained in Step S4E to the data transmission/reception unit 12E in Company A's determination unit 103 (Step S4F).

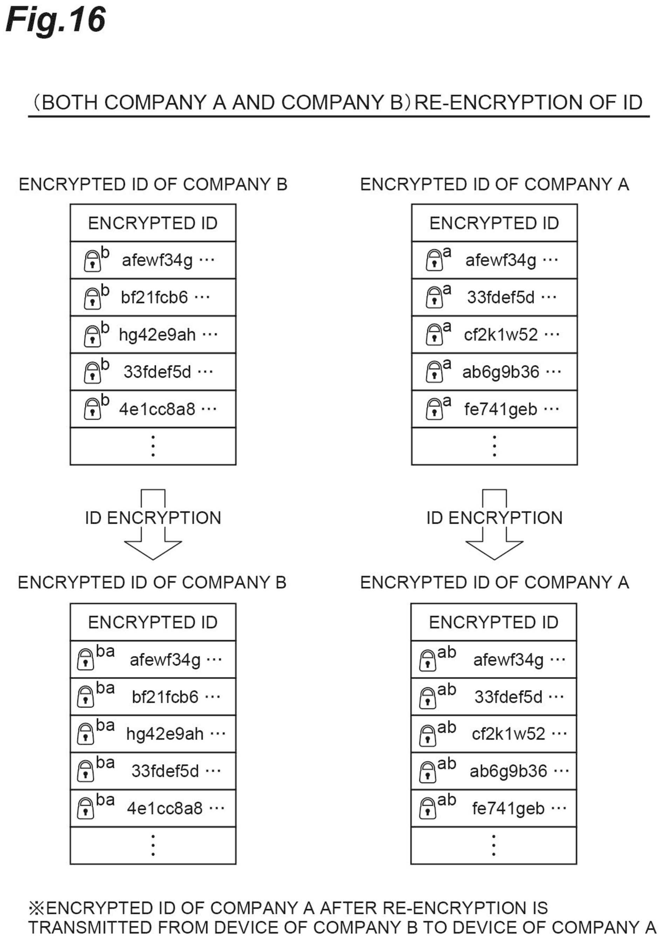

Next, as shown in FIG. 16, the encryption unit 12D in Company A's determination unit 103 re-encrypts Company B's encrypted ID in Company B's encrypted user data transmitted from Company B's information provision unit 201 with secret key a to obtain Company B's encrypted ID encrypted with both secret keys a and b (Step S3F). Similarly, the encryption unit 12D in Company B's information provision unit 201 re-encrypts Company A's encrypted ID transmitted from Company A's determination unit 103 with secret key b to obtain Company A's encrypted ID encrypted with both secret keys a and b (Step S4G). Then, the data transmission/reception unit 12E in Company B's information provision unit 201 transmits "Company A's encrypted ID encrypted with both secret keys a and b" obtained in Step S4G to Company A's determination unit 103 (Step S4H), and the data transmission/reception unit 12E in Company A's determination unit 103 receives Company A's encrypted ID (Step S3G).

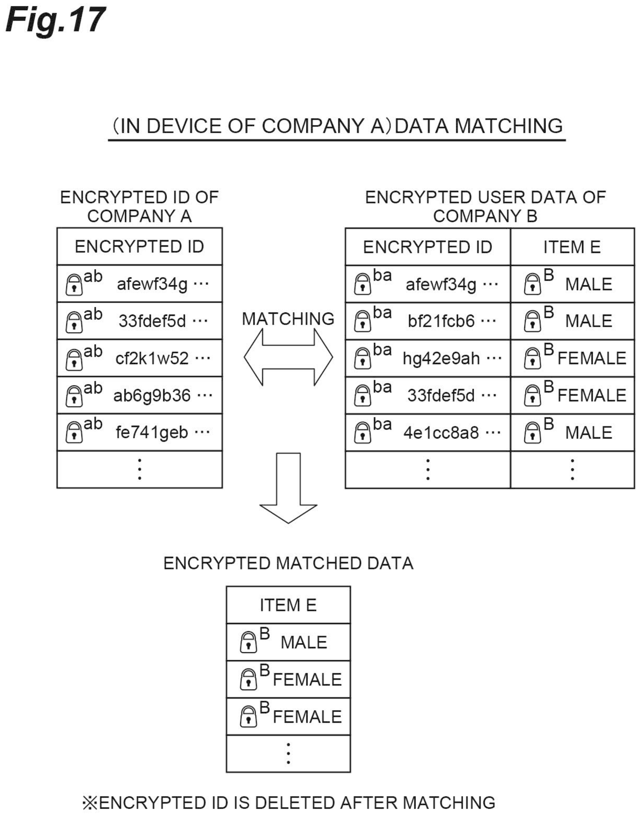

Next, as shown in FIG. 17, the data matching unit 13A in Company A's determination unit 103 replaces "encrypted ID encrypted with secret key a" obtained by ID encryption in Step S3D with "Company A's encrypted ID encrypted with both secret keys a and b" received in Step S3G to obtain Company A's encrypted ID shown in the upper left of FIG. 17. The data matching unit 13A also replaces "Company B's encrypted ID encrypted with secret key b" in "Company B's encrypted user data" received in Step S3E with "Company B's encrypted ID encrypted with both secret keys a and b" obtained by re-encryption in Step S3F to obtain Company B's encrypted user data shown in the upper right of FIG. 17. Then, the data matching unit 13A matches Company A's encrypted user data and Company B's encrypted user data using "Company A's encrypted ID encrypted with both secret keys a and b" and "Company B's encrypted ID encrypted with both secret keys a and b" as keys (Step S5). Here, when "Company A's encrypted ID encrypted with both secret keys a and b" and "Company B's encrypted ID encrypted with both secret keys a and b" match, the attribute information in Company A's encrypted user data and the encrypted attribute information in Company B's encrypted user data are combined as one record in the encrypted matched data, and after the combination, "Company A's encrypted ID encrypted with both secret keys a and b" and "Company B's encrypted ID encrypted with both secret keys a and b" are deleted to obtain encrypted matched data. However, in this embodiment, the attribute information in Company A's user data is not processed in the preliminary execution, so as shown in the lower part of FIG. 17, the encrypted matched data is composed of Company B's encrypted attribute information (encrypted Item E). As described above, the encrypted attribute information is composed of a predetermined binary value format and can be processed in the encrypted state. Of course, since Company B's attribute information is encrypted, Company A cannot know its content, and encrypted matched data is generated without disclosing the content of attribute information that should be kept confidential by Company B to Company A.

Returning to FIGS. 9 and 11, in this manner, the data matching unit 13A matches preliminary execution data A and preliminary execution data B, and the aggregation processing unit 13B counts the number of records for "male" and "female" in Item E for matched records to obtain aggregation processing results for "male" and "female" (Step S6). As described above, since the content of Item E in Company B's encrypted attribute information in the encrypted matched data is encrypted, Company A's determination unit 103 cannot know its content. However, as described above, since Item E in the encrypted matched data is composed of a predetermined binary value format, the total number of records with the binary value format corresponding to "male" and the total number of records with the binary value format corresponding to "female" can be calculated in the encrypted state.

Then, the disclosure limitation processing unit 13C performs disclosure limitation processing as follows on the above aggregation processing results (Step S7). For example, as shown in FIG. 11, for the aggregation processing results of "male" Num1 and "female" Num2 in Item E, noise corresponding to consumption of privacy budget 0.1 is added, and as shown at the right end of FIG. 11, the aggregation processing results after disclosure limitation processing are "male" Num1' and "female" Num2'. Furthermore, the calculation unit 13D calculates basic values from the aggregation processing results after disclosure limitation processing (Step S8). Here, for example, "data matching rate" and "data bias" are calculated as basic values. "Data matching rate" means the ratio of the number of matched records to the total number of records targeted for data matching, and for example, a data matching rate of 40% is calculated. "Data bias" means the difference between the item-wise ratio for a predetermined item derived from data of a single company and the item-wise ratio for the same item derived from data matched between companies, and data bias exists for each item targeted for calculation of item-wise ratio. However, in practice, due to privacy budget constraints, it is difficult to calculate data bias for all items in preliminary execution, so here, data bias is calculated for the main item E in aggregation. For Item E, the item-wise ratio ("male" ratio) of 45% is calculated by Company B's independent basic aggregation in Step S10 in FIG. 9 executed in parallel with Steps S3 to S8 described above, and the item-wise ratio ("male" ratio) of 45% is derived from data matched between Company A and Company B as shown in FIG. 11, so data bias of "0%" is calculated as a basic value.

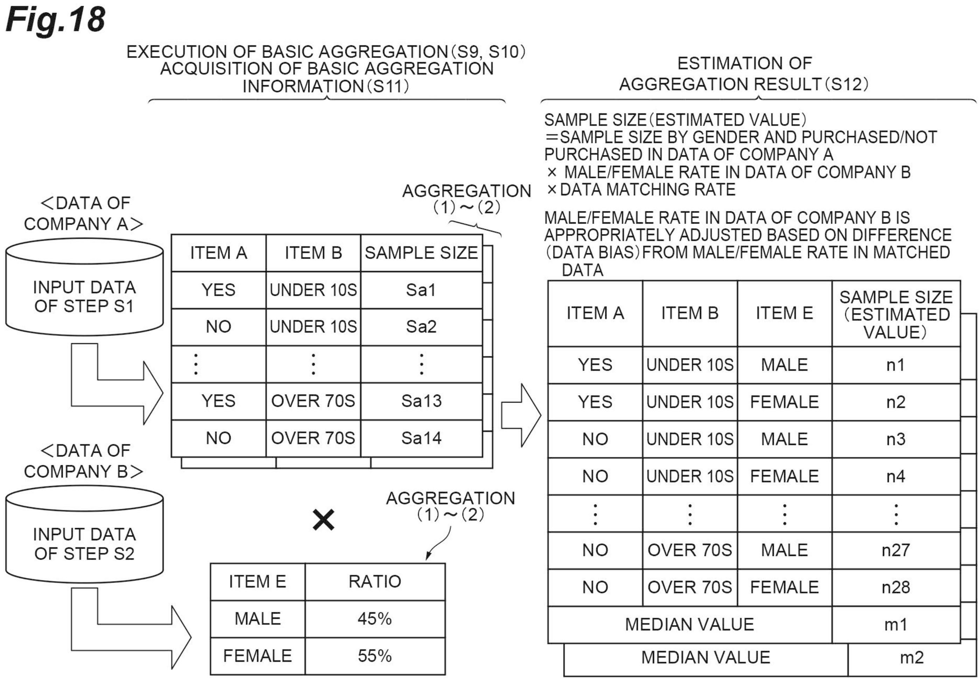

Returning to FIG. 9, the basic aggregation information acquisition unit 14A in Company A's determination unit 103 calculates sample size and item-wise ratio, which are basic aggregation information, for Company A's data (Step S9). For example, for aggregation (1) of Item A × B × E, as shown in FIG. 18, the sample size and ratio for each of "Purchased × under teens", "Not Purchased × under teens", ..., "Not Purchased × 70s and above" in "Item A (Product Purchase Status) × Item B (Age Group)" in Company A's data are calculated. For aggregation (2) of Item A × D × E, the sample size and ratio for each of "Purchased × 1 person", "Not Purchased × 1 person", ..., "Not Purchased × 3 or more persons" in "Item A (Product Purchase Status) × Item D (Number of Cohabitants)" in Company A's data are calculated.

Similarly, the basic aggregation information provision unit 14B in Company B's information provision unit 201 calculates sample size and item-wise ratio, which are basic aggregation information, for Company B's data and provides them to Company A's determination unit 103 (Step S10). For aggregation (1) of Item A × B × E and aggregation (2) of Item A × D × E, as shown in FIG. 18, the sample size and ratio for "male" and "female" in Item E (Gender) in Company B's data are calculated.

Then, the basic aggregation information acquisition unit 14A in Company A's determination unit 103 receives the basic aggregation information (sample size and item-wise ratio for Item E (Gender)) provided (transmitted) by the basic aggregation information provision unit 14B in Company B's information provision unit 201, thereby acquiring basic aggregation information of both Company A and Company B (Step S11).

Next, the estimation unit 15 estimates the sample size of aggregation results as follows based on the basic aggregation information of Company A and Company B acquired by the basic aggregation information acquisition unit 14A and the basic values calculated by the basic value calculation unit 13 (Step S12). For "Item A × B × E" in the aggregation pattern (Item A × B × E, Item A × D × E), as shown in FIG. 18, the sample size of aggregation results is estimated by applying the following formula (6).

Sample size $n_i$ (estimated value) =

Sample size for each age group and purchase status in Company A's data

× ratio of male and female in Company B's data

× data matching rate    (6)

For example, for "Item A × B × E", the sample size estimate n1 is obtained by multiplying the sample size Sa1 for "Purchased and under teens" in Company A's data, the male ratio of 45% in Company B's data, and the data matching rate of 40%. Similarly, the sample size estimate n2 for "Not Purchased and under teens and male" is obtained, n3 for "Purchased and under teens and female" is obtained, ..., and n28 for "Not Purchased and 70s and above and female" is obtained. Then, the median m1 of the above 28 estimated values n1 to n28 is obtained as the value between the 14th and 15th largest values n14 and n15. Similarly, for "Item A × D × E", the median m2 of the sample size estimates of aggregation results is obtained.

Note that, in this embodiment, the "median" of sample size estimates of aggregation results is used as an example, but the mean, minimum, etc. may be used. Also, as described above, in Step S8 in FIG. 9, the data bias among the basic values was 0%, but if there is data bias for the main item (here, Item E), it is desirable to adjust (correct) the "ratio of male and female in Company B's data" in the formula (6) for calculating sample size $n_i$ (estimated value) so that it approaches the ratio of male and female in matched data by the amount of data bias.

Returning to FIG. 9, in the next Step S13, the evaluation unit 16 quantitatively evaluates the influence of noise for each combination included in the aggregation pattern based on the estimated sample size of aggregation results (here, the median of sample size estimates) as follows. In this embodiment, the variance of the change in sample size n is used as an evaluation index for the influence of noise.

[Equation 8]

$$V\left[\frac{n+z}{n}\right] = \frac{1}{n^2}V[z] \qquad (\text{n is a constant}) \quad (7)$$

The variance of noise z is as follows and the value varies depending on the probability distribution used to generate noise.
[Equation 9]

$$V[z] = 2\left(\frac{1}{\varepsilon}\right)^2 \qquad (8)$$

By substituting the variance of noise z into the formula (7), the variance of the change in sample size n is obtained as follows.
[Equation 10]

$$V\left[\frac{n+z}{n}\right] = \frac{2}{(n\varepsilon)^2} \qquad (9)$$

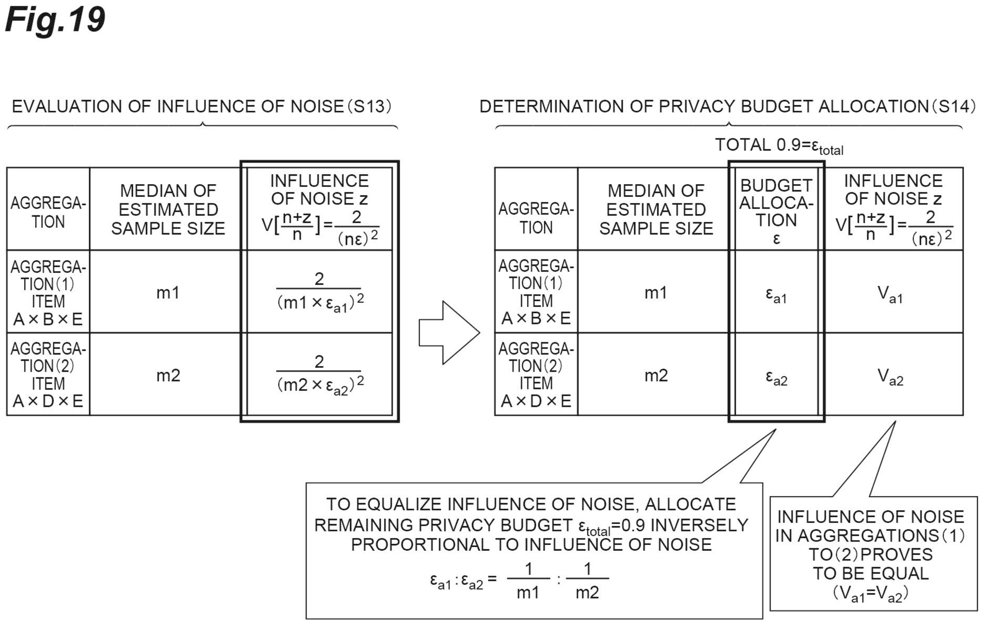

Here, the allocation of the privacy budget for aggregations (1) and (2) is $\varepsilon_{a1}$ and $\varepsilon_{a2}$, respectively, and by using the formula (9) above, as shown in the table on the left side of FIG. 19, the evaluation indices for the influence of noise for aggregations (1) and (2) are obtained respectively, as follows.

[Equation 11]

$$\frac{2}{(m1 \times \varepsilon_{a1})^2} \quad \text{and} \quad \frac{2}{(m2 \times \varepsilon_{a2})^2}$$

Note that, as an evaluation index, the variance of the change in sample size n above is not essential, and other indices for measuring data accuracy (e.g., sample error rate, statistical power, etc.) may be used depending on the aggregation purpose.
In the next Step S14, the allocation determination unit 17 determines the allocation of privacy budget to each combination based on the evaluation results for each combination obtained by the evaluation unit 16 as follows. Here, for example, the allocation determination unit 17 allocates the remaining privacy budget $\varepsilon_{total}$ "0.9" by weighting with a function inversely proportional to the magnitude of the influence of noise to equalize the influence of noise. Specifically, as shown on the right side of FIG. 12, the remaining privacy budget $\varepsilon_{total}$ "0.9" is allocated to the budget allocations $\varepsilon_{a1}$ and $\varepsilon_{a2}$ for each aggregation so that the ratio mentioned below is achieved.

[Equation 12]

$$\varepsilon_{a1} : \varepsilon_{a2} = \frac{1}{m1} : \frac{1}{m2}$$

At this time, the influence of noise z in aggregations (1) and (2) is equalized ($V_{a1} = V_{a2}$).
By the processing of Step ST3 (determination of the allocation of the privacy budget) in FIG. 8 described above, it is possible to quantitatively evaluate the influence of noise for each combination included in the aggregation pattern, and to determine the allocation of privacy budget to each combination based on the evaluation results for each combination, thereby optimizing the allocation of privacy budget. Also, by performing preliminary execution of test aggregation targeting the actually input user data of both Company A and Company B, it is possible to appropriately calculate basic values such as data matching rate based on the actual input data and use them in aggregation processing, thereby contributing to the optimization of aggregation processing.

(5-2-3: Details of Step ST4 in FIG. 8 (Aggregation processing))

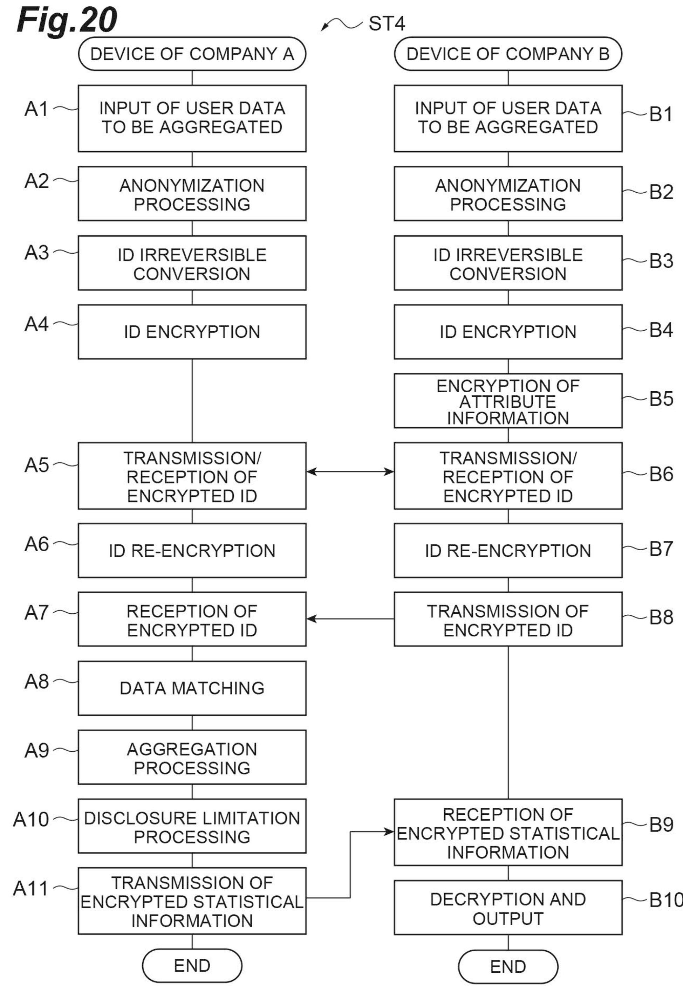

Next, the details of Step ST4 in FIG. 8 (aggregation processing) will be described with reference to FIG. 7 and FIGS. 20 to 28.
First, in both Company A's aggregation execution unit 104 and Company B's aggregate output unit 202 shown in FIG. 7, user data to be aggregated is input to the anonymization processing unit 21 (Steps A1 and B1 in FIG. 20). The user data input here is the user data described in FIG. 2 above.

Next, the anonymization processing unit 21 in both Company A's aggregation execution unit 104 and Company B's aggregate output unit 202 performs anonymization processing for privacy protection of attribute information in user data held by each organization (Steps A2 and B2). Here, as an example of anonymization processing, k-anonymization is performed by converting user data so that there are at least k user data with the same attribute information in the target user data, thereby reducing the probability of identifying individuals to 1/k or less. However, if k-anonymization is deemed unnecessary, the processing in Steps A2 and B2 is not essential.

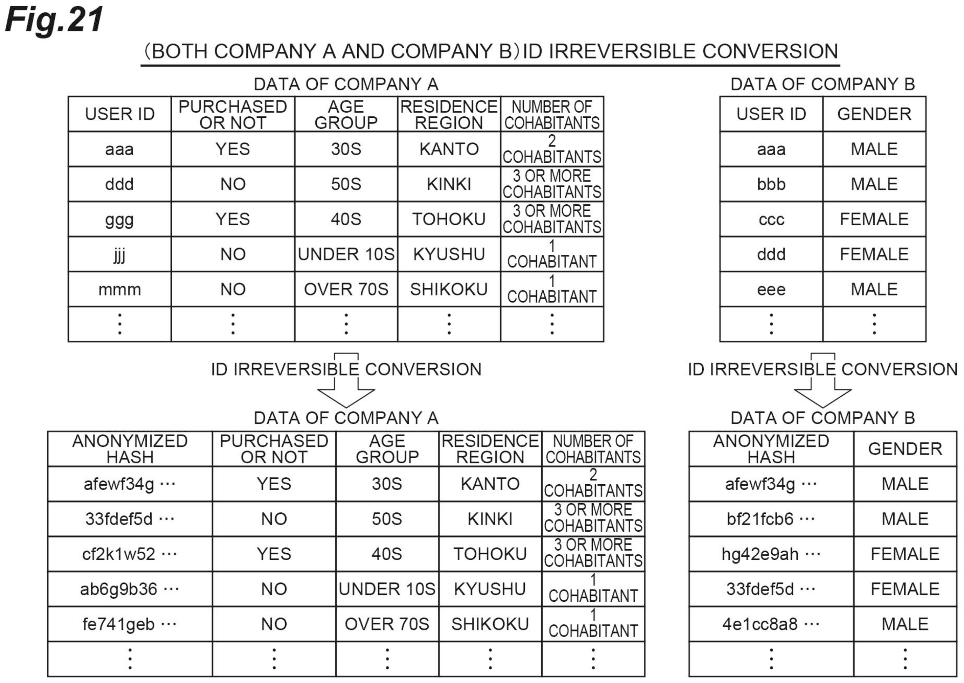

Next, as shown in FIG. 21, the ID irreversible conversion unit 22 in both Company A's aggregation execution unit 104 and Company B's aggregate output unit 202 performs irreversible conversion processing of user IDs in user data held by each organization (Steps A3 and B3). Specifically, the ID irreversible conversion unit 22 performs hashing of user IDs and then discards the salt used in the hashing process.

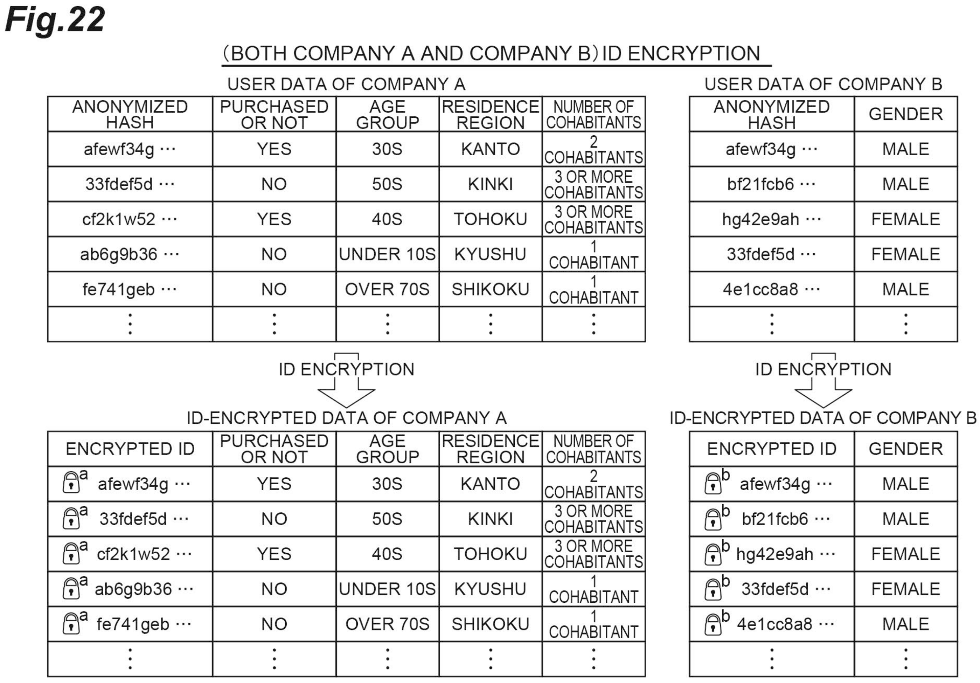

Next, as shown in FIG. 22, the ID encryption unit 23A in Company A's aggregation execution unit 104 encrypts the non-identifiable hash (user ID part in user data) with a pre-prepared secret key a to obtain Company A's encrypted ID data (Step A4). Similarly, the ID encryption unit 23A in Company B's aggregate output unit 202 encrypts the non-identifiable hash (user ID part in user data) with a pre-prepared secret key b to obtain Company B's encrypted ID data (Step B4).

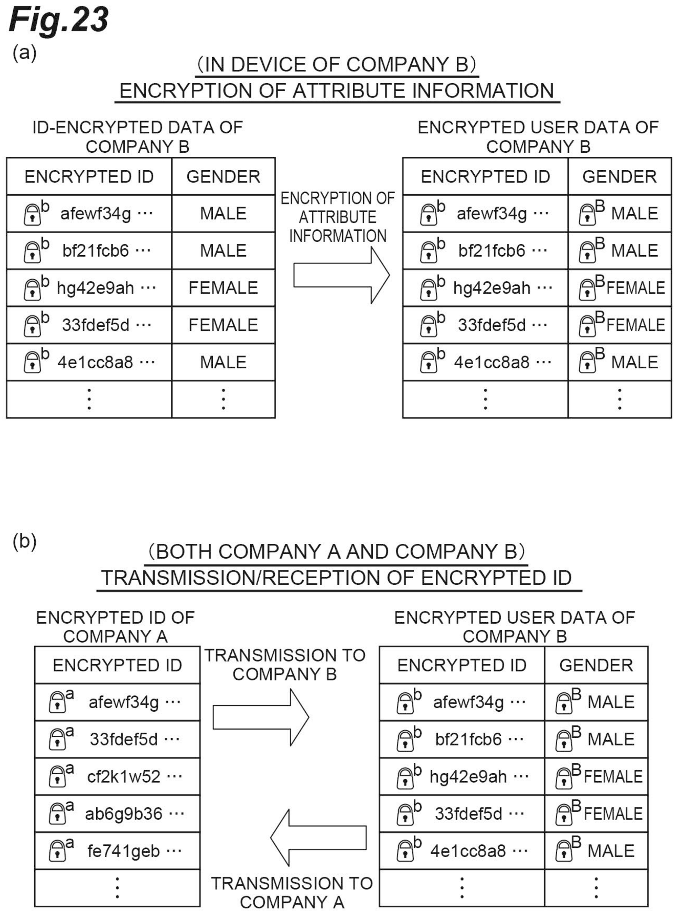

Next, as shown in FIG. 23(a), the attribute information encryption unit 23B in Company B's aggregate output unit 202 encrypts the attribute information in Company B's encrypted ID data obtained in Step B4 using a homomorphic encryption scheme that allows aggregation processing with a pre-prepared secret key B, thereby generating Company B's encrypted user data (Step B5).

Next, as shown in FIG. 23(b), the data transmission/reception unit 24 in Company A's aggregation execution unit 104 transmits Company A's encrypted ID in Company A's encrypted ID data obtained in Step A4 to the data transmission/reception unit 24 in Company B's aggregate output unit 202 (Step A5). The data transmission/reception unit 24 in Company B's aggregate output unit 202 transmits Company B's encrypted user data (i.e., data including Company B's encrypted ID and encrypted attribute information) obtained in Step B5 to the data transmission/reception unit 24 in Company A's aggregation execution unit 104 (Step B6).

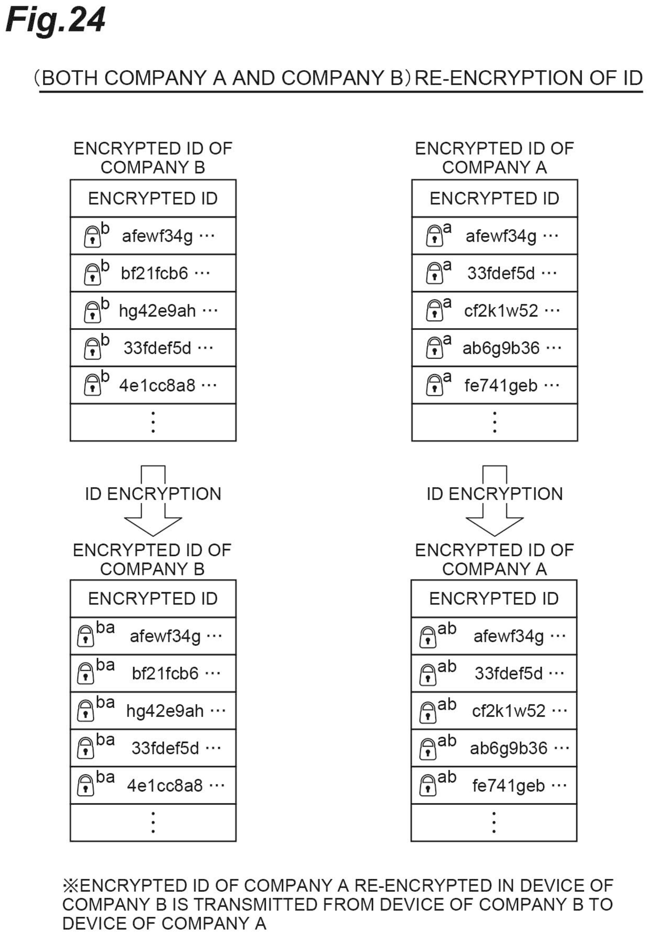

Next, as shown in FIG. 24, the ID encryption unit 23A in Company A's aggregation execution unit 104 re-encrypts Company B's encrypted ID in Company B's encrypted user data transmitted in Step B6 with secret key a to obtain Company B's encrypted ID encrypted with both secret keys a and b (Step A6). Similarly, the ID encryption unit 23A in Company B's aggregate output unit 202 re-encrypts Company A's encrypted ID transmitted in Step A5 with secret key b to obtain Company A's encrypted ID encrypted with both secret keys a and b (Step B7). Then, the data transmission/reception unit 24 in Company B's aggregate output unit 202 transmits "Company A's encrypted ID encrypted with both secret keys a and b" obtained in Step B7 to Company A's aggregation execution unit 104 (Step B8), and the data transmission/reception unit 24 in Company A's aggregation execution unit 104 receives Company A's encrypted ID (Step A7).

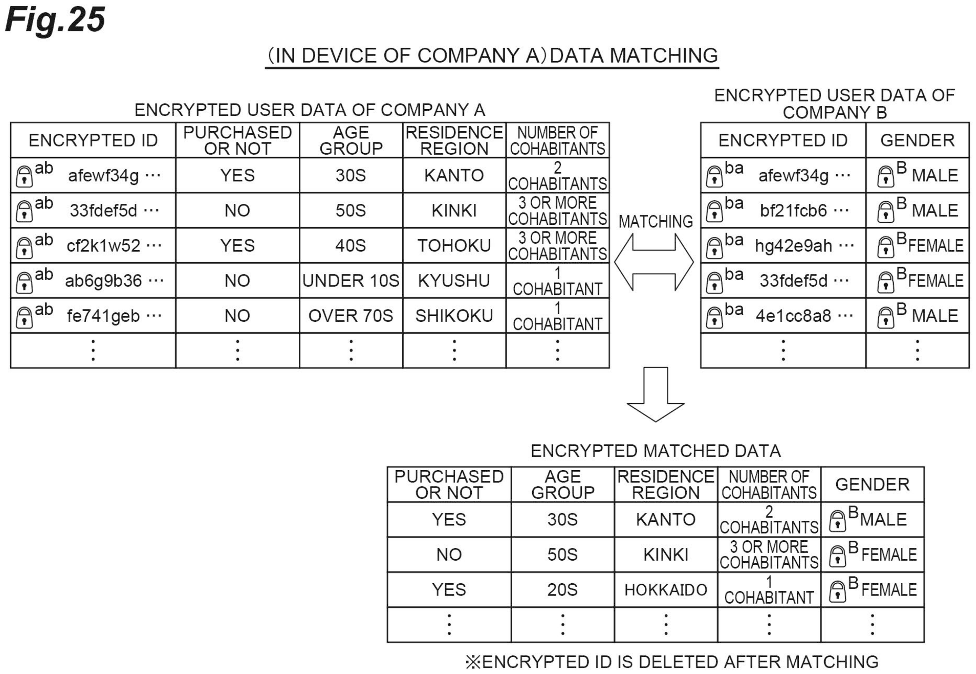

Next, as shown in FIG. 25, the data matching unit 25 in Company A's aggregation execution unit 104 replaces "encrypted ID encrypted with secret key a" in "Company A's encrypted ID data" obtained by ID encryption in Step A4 with "Company A's encrypted ID encrypted with both secret keys a and b" received in Step A7 to obtain Company A's encrypted user data shown in the upper left of FIG. 25. The data matching unit 25 also replaces "Company B's encrypted ID encrypted with secret key b" in "Company B's encrypted user data" received in Step A5 with "Company B's encrypted ID encrypted with both secret keys a and b" obtained by re-encryption in Step A6 to obtain Company B's encrypted user data shown in the upper right of FIG. 25. Then, the data matching unit 25 matches Company A's encrypted user data and Company B's encrypted user data using "Company A's encrypted ID encrypted with both secret keys a and b" and "Company B's encrypted ID encrypted with both secret keys a and b" as keys (Step A8). Here, when "Company A's encrypted ID encrypted with both secret keys a and b" and "Company B's encrypted ID encrypted with both secret keys a and b" match, the attribute information in Company A's encrypted user data and the encrypted attribute information in Company B's encrypted user data are combined as one record in the encrypted matched data, and after combination, "Company A's encrypted ID encrypted with both secret keys a and b" and "Company B's encrypted ID encrypted with both secret keys a and b" are deleted. As a result, as shown in the lower part of FIG. 25, encrypted matched data including Company A's unencrypted attribute information and Company B's encrypted attribute information is obtained. Here, since Company B's attribute information is encrypted, Company A cannot know its content, and encrypted matched data is generated without disclosing the content of attribute information that should be kept confidential by Company B to Company A.

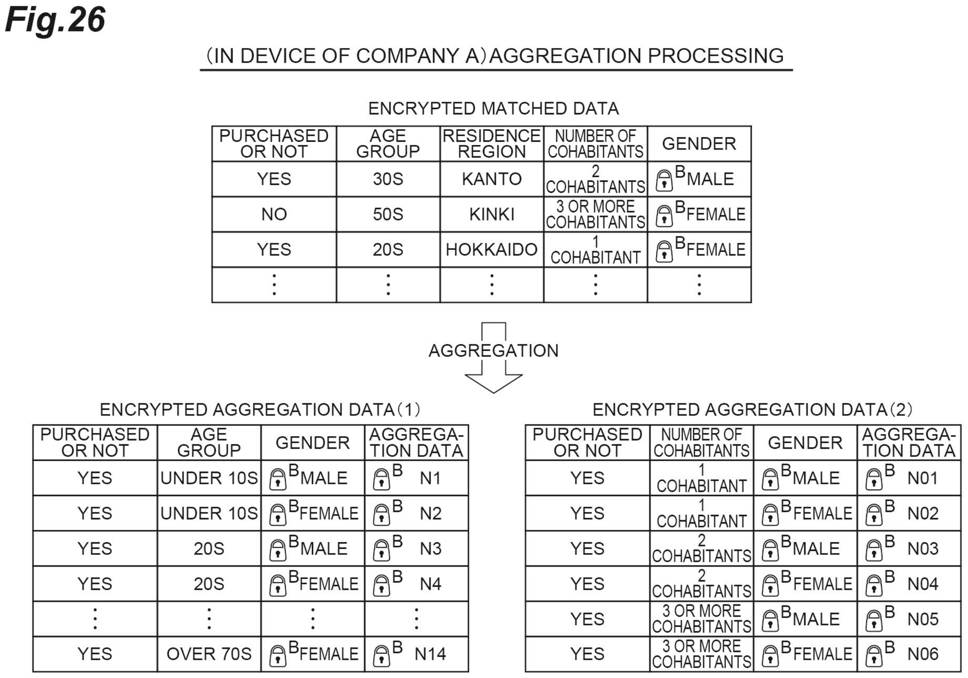

Next, as shown in FIG. 26, the aggregation processing unit 26 in Company A's aggregation execution unit 104 performs aggregation processing as follows on the encrypted matched data (Step A9). As described above, the attribute information in Company B's encrypted ID data is encrypted with a homomorphic encryption scheme that allows aggregation processing with a pre-prepared secret key B in Step B5. Therefore, in practice, each attribute information in the encrypted matched data in FIG. 26 is composed of a predetermined binary value format (bit arrangement), and for "Gender", for example, if the P-th and (P+1)-th bits from the beginning in the encrypted matched data are "10", it indicates "male", and if "01", it indicates "female". At this time, since Company A does not know secret key B, it cannot know the actual content of "Gender", and can only recognize it as a bit string. Based on the above, the aggregation processing unit 26, for example, for aggregation pattern (1) "Item A (Product Purchase Status) $\times$ B (Age Group) $\times$ E (Gender)", performs aggregation processing as follows.

First, the aggregation processing unit 26 categorizes multiple records constituting the encrypted matched data based on Company A's attribute information (unencrypted "Product Purchase Status" and "Age Group"). That is, multiple records constituting the encrypted matched data are divided into multiple categories such as "Purchased, under teens", "Purchased, 20s", ..., "Purchased, 70s and above". Next, the aggregation processing unit 26 performs aggregation processing for each category by summing vertically (same bits in bit strings) for multiple records represented by binary values belonging to each category. Since Company B's attribute information represented by binary values is encrypted with a homomorphic encryption scheme, summing is possible even in the encrypted state. As a result, for each category, the number of records with the P-th and (P+1)-th bits as "10" (i.e., aggregation result for male) and the number of records with the P-th and (P+1)-th bits as "01" (i.e., aggregation result for female) are obtained. Note that, in this embodiment, the aggregation processing unit 26 divides input data into categories, but aggregation processing may be performed by dividing data into categories for each aggregation pattern when inputting data to the aggregation execution unit 104 in FIG. 7.

Similarly, for aggregation pattern (2) "Item A (Product Purchase Status) $\times$ D (Number of Cohabitants) $\times$ E (Gender)", the aggregation processing unit 26 categorizes multiple records constituting the encrypted matched data based on Company A's attribute information (unencrypted "Product Purchase Status" and "Number of Cohabitants") into categories such as "Purchased, 1 person", "Purchased, 2 persons", "Purchased, 3 or more persons", and performs aggregation processing (aggregate by gender for each category) by summing vertically (same bits in bit strings) for multiple records represented by binary values belonging to each category.

Furthermore, the aggregation processing unit 26 changes the categorized encrypted matched data into a tidy data format by adding aggregate data for each category, thereby obtaining encrypted aggregate data. In the aggregation processing of Step A9 described above, since Company A does not know secret key B, it cannot know the actual content of "Gender" in Company B's attribute information, and can prevent leakage of the actual content of Company B's attribute information to Company A.

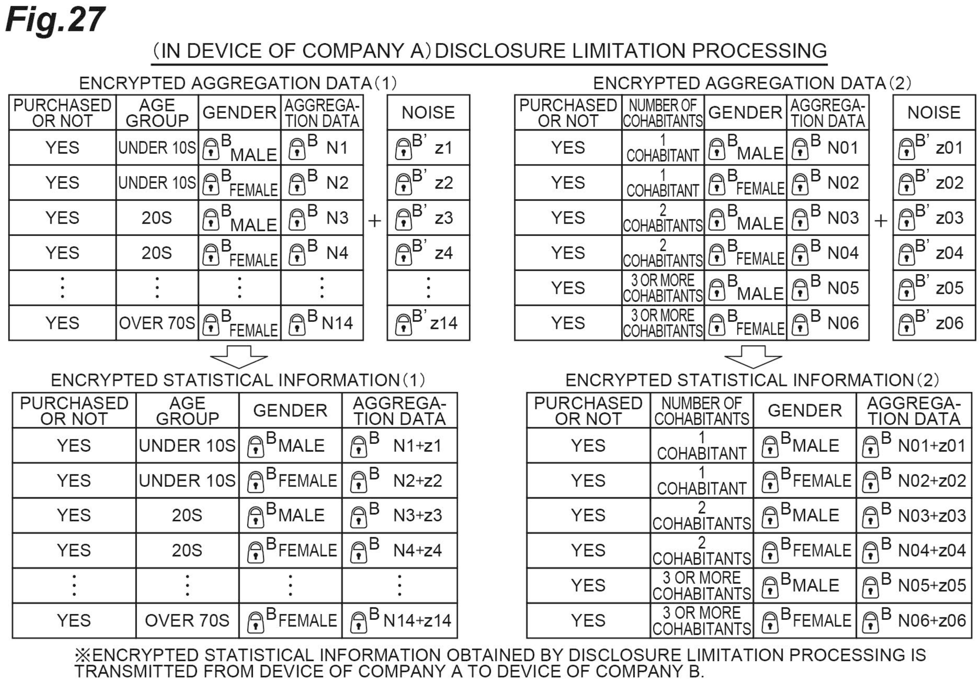

Next, as shown in FIG. 27, the disclosure limitation processing unit 27 in Company A's aggregation execution unit 104 performs disclosure limitation processing as follows on the encrypted aggregate data generated by the aggregation processing unit 26 to generate encrypted statistical information (Step A10). For example, the disclosure limitation processing unit 27 generates noise with Company B's operation key B' (a type of public key), and adds the generated noise to the encrypted aggregate data to generate encrypted statistical information. The operation key B' above corresponds to secret key B and is assumed to be shared in advance from Company B to Company A.

Then, the data transmission/reception unit 24 in Company A's aggregation execution unit 104 transmits the encrypted statistical information generated in Step A10 to Company B's aggregate output unit 202 (Step A11), and the data transmission/reception unit 24 in Company B's aggregate output unit 202 receives the encrypted statistical information (Step B9).

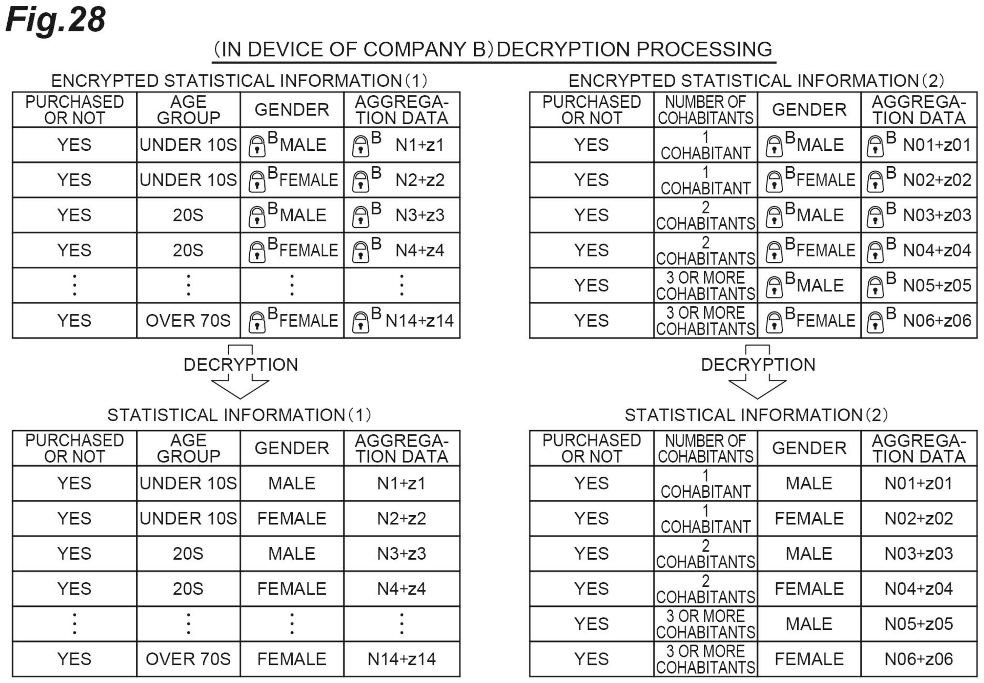

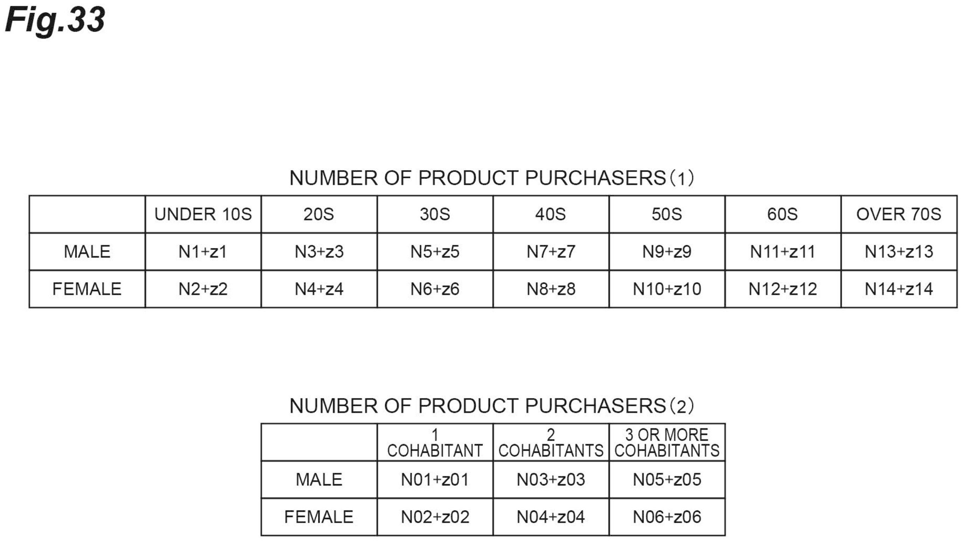

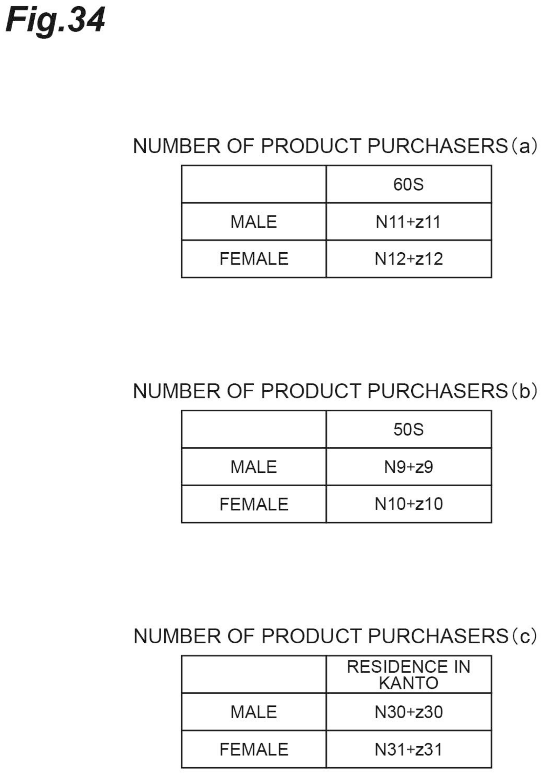

Furthermore, in Company B's aggregate output unit 202, the received encrypted statistical information is sent to the decryption unit 28, and the decryption unit 28 in Company B, which knows secret key B, decrypts the encrypted statistical information as shown in FIG. 28 and outputs the obtained statistical information as appropriate (Step B10). For example, the statistical information may be displayed or printed by a predetermined operation by the operator of Company B's information processing device 200. FIG. 33 shows an example of output when the number of people with "Product Purchase Status: Not Purchased" is omitted and only the number of people with "Product Purchase Status: Purchased" is aggregated. As shown in FIG. 33, for aggregation pattern (1), the number of people by age group and gender who purchased the product is output, and for aggregation pattern (2), the number of people by number of Cohabitants and gender who purchased the product is output. Also, as in the fourth embodiment described above, when categories subdivided from data items (e.g., "Age Group: 60s", "Age Group: 50s", and "Residential Area: Kanto") are selected as targets to be included in the aggregation pattern, as shown in FIG. 34, the number of people by gender who purchased the product in their 60s (a), the number of people by gender who purchased the product in their 50s (b), and the number of people by gender who purchased the product living in Kanto (c) are output.

By the aggregation processing of Step ST4 in FIG. 8 described above, by cooperation between Company A's information processing device 100 and Company B's information processing device 200, it is possible to generate statistical information in which the correspondence with individuals is eliminated without disclosing attribute information or secret keys that should be kept confidential to other devices.

According to the fifth embodiment described above, after appropriately selecting data items based on the relevance between the index related to the purpose of data utilization and data items, it is possible to execute determination of the allocation of the privacy budget and aggregation processing targeting the data items, thereby improving the utility of statistical information output by data linkage in statistical data utilization among multiple companies.

[Sixth Embodiment]

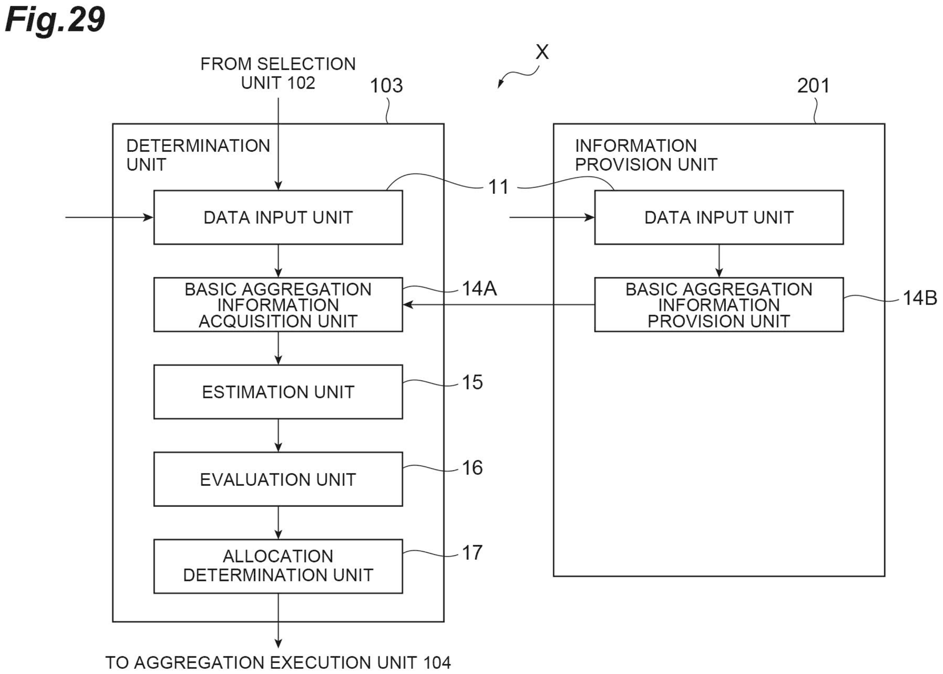

The sixth embodiment will be described below, in which, in addition to selection of data items as in the first to fourth embodiments, determination of an allocation of a privacy budget (excluding calculation of basic values) and aggregation processing for aggregation patterns including the selected data items are executed. The sixth embodiment differs from the fifth embodiment only in the processing of Step ST3 (determination of the allocation of the privacy budget) in FIG. 8, so the configuration and processing related to Step ST3 specific to the sixth embodiment (FIGS. 29 to 32) will be focused on.

Since preliminary processing for calculation of basic values is not executed, the configuration indicated by arrow X in FIG. 5 does not require the basic value calculation unit 13 and the preliminary execution data generation unit 12 described in FIG. 6 of the fifth embodiment, as shown in FIG. 29. Therefore, Company A's determination unit 103 includes a data input unit 11, a basic aggregation information acquisition unit 14A, an estimation unit 15, an evaluation unit 16, and an allocation determination unit 17, while Company B's information provision unit 201 includes a data input unit 11 and a basic aggregation information provision unit 14B. Since the functions of each unit have been described in the fifth embodiment, redundant explanations are omitted here.

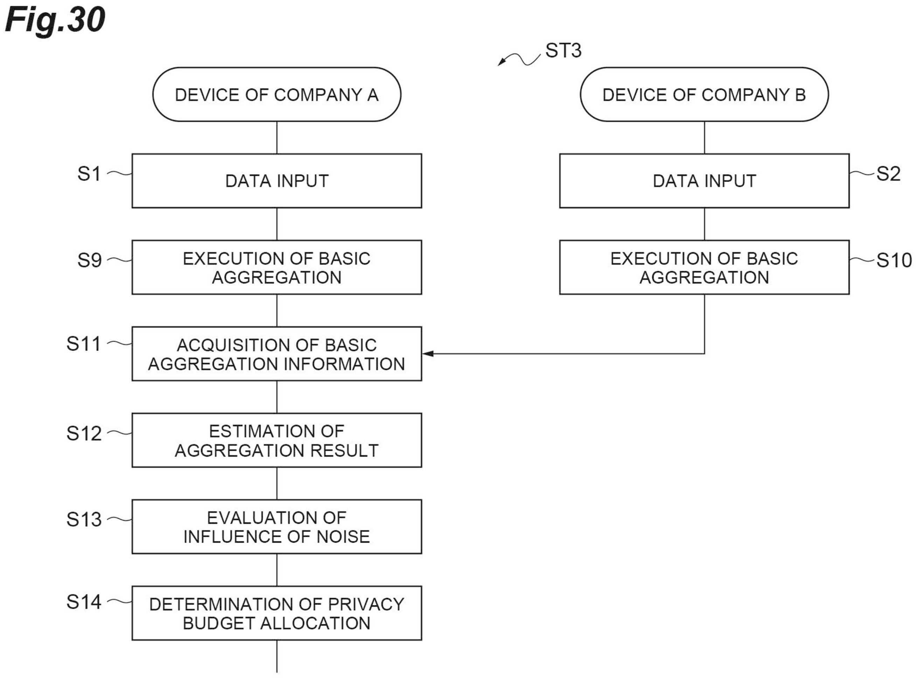

As shown in FIG. 30, the processing in the sixth embodiment does not include generation of preliminary execution data (Steps S3 and S4 in FIG. 9) and processing related to calculation of basic values (Steps S5 to S8 in FIG. 9). Also, since the processing in Steps S1, S2, and S9 to S11 in FIG. 30 is the same as in the fifth embodiment, redundant explanations are omitted.

In Step S12, the estimation unit 15 in Company A's determination unit 103 estimates the sample size of aggregation results by the same method as in the fifth embodiment based on the "basic aggregation information" of Company A and Company B acquired by the basic aggregation information acquisition unit 14A in Step S11 and "basic values" using known or estimated values. Here, for each item in the aggregation pattern (Item $A \times B \times E$, Item $A \times D \times E$), the sample size of aggregation results (here, the median of sample size estimates) m1 and m2 are obtained, respectively. Note that, in this embodiment, the "median" of sample size estimates is used as an example, but the mean, minimum, etc. may be used.

In the next Step S13, the evaluation unit 16 in Company A's determination unit 103 quantitatively evaluates the influence of noise for each combination included in the aggregation pattern by the same method as in the fifth embodiment based on the estimated sample size of aggregation results. As an evaluation index for the influence of noise, the variance of the change in sample size n mentioned below is used.

[Equation 13]

$$V\left[\frac{n+z}{n}\right] = \frac{1}{n^2}V[z] = \frac{2}{(n\varepsilon)^2} \quad (\text{n is a constant}) \quad (10)$$

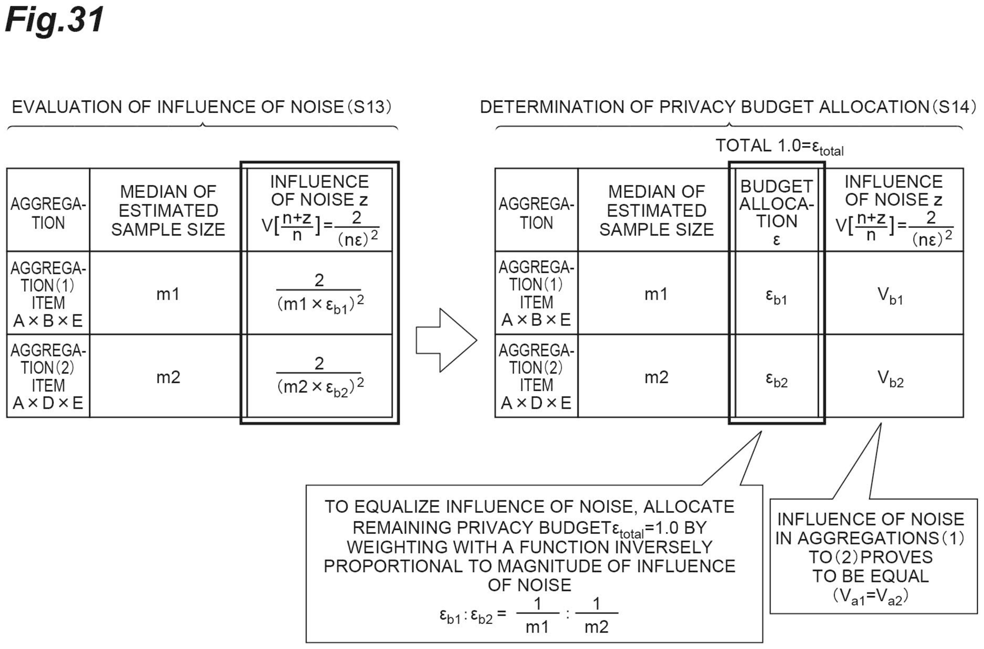

By using the formula (10) above, as shown in the table on the left side of FIG. 31, the evaluation indices for the influence of noise for aggregations (1) and (2) are obtained respectively, as follows.

[Equation 14]

$$\frac{2}{(m1 \times \varepsilon_{b1})^2} \quad \text{and} \quad \frac{2}{(m2 \times \varepsilon_{b2})^2}$$

Note that, as an evaluation index, other indices for measuring data accuracy (e.g., sample error rate, statistical power, etc.) may be used depending on the aggregation purpose.

In the next Step S14, the allocation determination unit 17 in Company A's determination unit 103 determines the allocation of privacy budget to each combination based on the evaluation results for each combination obtained by the evaluation unit 16 as follows. Here, as the first allocation example, an example is described in which the allocation determination unit 17 weights each combination with a function inversely proportional to the magnitude of the influence of noise, as in the fifth embodiment, and determines the allocation of privacy budget to each combination. Furthermore, as the second allocation example, an example is described in which the allocation determination unit 17 determines the allocation of privacy budget to each combination so as to satisfy the required level of accuracy necessary to suppress the influence of noise for each combination.

In the first allocation example, the allocation determination unit 17 determines the allocation of the remaining privacy budget $\varepsilon_{\text{total}}$ "1.0" by weighting with a function inversely proportional to the magnitude of the influence of noise to equalize the influence of noise. In the sixth embodiment, since "generation of preliminary execution data (Steps S3 and S4 in FIG. 2)" that consumes privacy budget is not executed, the remaining privacy budget $\varepsilon_{total}$ is "1.0", which is different from the fifth embodiment. Specifically, as shown on the right side of FIG. 31, the remaining privacy budget $\varepsilon_{total}$ "1.0" is allocated to the budget allocations $\varepsilon_{b1}$ and $\varepsilon_{b2}$ for aggregations (1) and (2) respectively, so that the ratio mentioned below is achieved.

$$[\text{Equation 15}]$$

$$\varepsilon_{b1} : \varepsilon_{b2} = \frac{1}{m1} : \frac{1}{m2}$$

At this time, the influence of noise z in aggregations (1) and (2) is equalized ($V_{b1} = V_{b2}$).

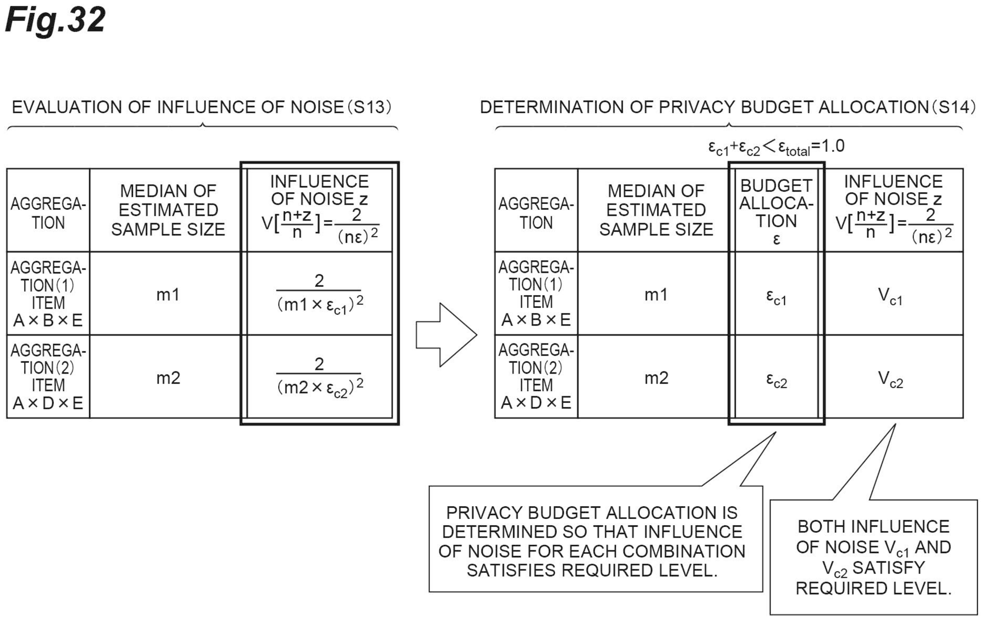

In the second allocation example, the allocation determination unit 17 determines the allocation of the remaining privacy budget $\varepsilon_{total}$ "1.0" to each combination so as to satisfy the required level of accuracy necessary to suppress the influence of noise for each combination. In this case, if the required level of accuracy cannot be achieved within the privacy budget, it is possible not to implement a specific aggregation among aggregations (1) and (2), or to relax the required level of accuracy. As an example of a method for quantitatively setting the required level of accuracy, a method is considered in which the level at which items to be detected (e.g., purchase rate by attribute (age group or gender), difference in number of purchasers by attribute (age group or gender), etc.) can be detected from aggregation results is set as the required level of accuracy. For example, as shown on the right side of FIG. 32, an example is shown in which the allocation of privacy budget is determined so that the influence of noise for each combination satisfies the required level of accuracy (here, so that it matches the required level). In this case, the influence of noise for each combination satisfies the required level of accuracy, and the remaining privacy budget is allocated to budget allocations $\varepsilon_{c1}$ and $\varepsilon_{c2}$. Here, the consumed privacy budget ($\varepsilon_{c1} + \varepsilon_{c2}$) becomes smaller than the remaining privacy budget $\varepsilon_{total}$ "1.0", resulting in surplus privacy budget.

Note that the method of allocating privacy budget is not limited to the first and second allocation examples above, and various allocation methods may be adopted depending on the aggregation purpose.

Also in the sixth embodiment described above, as in the fifth embodiment, after appropriately selecting data items based on the relevance between the index related to the purpose of data utilization and data items, it is possible to execute determination of the allocation of the privacy budget and aggregation processing targeting the data items, thereby improving the utility of statistical information output by data linkage in statistical data utilization among multiple companies.

Note that, regarding the method of allocating privacy budget, various allocation methods such as the first and second allocation examples in the sixth embodiment described above can also be applied to the fifth embodiment.

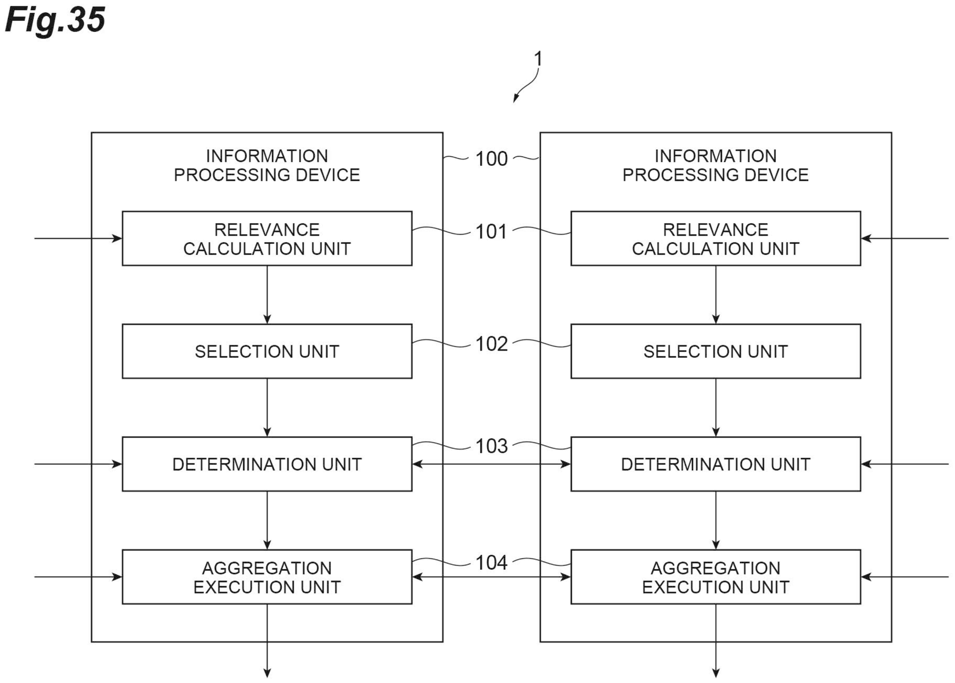

Furthermore, in the fifth to sixth embodiments, as shown in FIG. 5, the configuration is described in which Company A's information processing device 100 includes functional units such as the relevance calculation unit 101 and the selection unit 102, while Company B's information processing device 200 does not include these functional units. However, this configuration is not limited, and as a modified example, both companies' information processing devices 100 and 200 may include the same functional units as shown in FIG. 35. In this case, the relevance calculation and selection processing can be executed by either device. However, the determination unit 103 also functions as the information provision unit 201 in FIG. 5, and when the determination unit 103 of the counterpart device leads the determination of the allocation of the privacy budget, it functions as the information provision unit 201. Also, the aggregation execution unit 104 also functions as the aggregate output unit 202 in FIG. 5, and when the aggregation execution unit 104 of the counterpart device leads the aggregation processing, it functions as the aggregate output unit 202. Even in such a modified example, the same effects as in the fifth to sixth embodiments can be obtained.

This disclosure includes the following points [1] to [9].

[1] An information processing device that, when executing aggregation targeting an aggregation pattern including multiple combinations of data items contained in attribute information between the information processing device itself and a counterpart device, both holding user data including a user ID and the attribute information related to a user, adds noise based on differential privacy criteria to aggregation results within a privacy budget, and executes the aggregation targeting the aggregation pattern, comprising:

a relevance calculation unit that calculates relevance between an index related to a purpose of data utilization and the data item contained in the attribute information; and
a selection unit that selects data items to be included in the aggregation pattern based on the relevance calculated by the relevance calculation unit.

[2] The information processing device according to [1], wherein the relevance calculation unit generates a prediction model of machine learning using the index as an objective variable and the data item contained in the attribute information as an explanatory variable, and calculates the relevance based on the obtained prediction model.

[3] The information processing device according to [1], wherein the relevance calculation unit calculates a correlation coefficient between the index and the data item contained in the attribute information, and uses the calculated correlation coefficient as the relevance.

[4] The information processing device according to any one of [1] to [3], wherein the relevance calculation unit calculates the relevance between the index and each of the data items contained in the attribute information, targeting each category obtained by classifying the data items into multiple categories, and the selection unit selects the data items to be included in the aggregation pattern based on the relevance of each data item for each category.

[5] The information processing device according to [4], wherein the selection unit identifies categories with high relevance based on predetermined criteria, and selects the data items to be included in the aggregation pattern based on the number of the categories with high relevance for each data item.

[6] The information processing device according to [4], wherein the selection unit identifies categories with high relevance based on predetermined criteria, and selects the categories with high relevance as the data items to be included in the aggregation pattern.

[7] The information processing device according to any one of [1] to [6], further comprising:

a determination unit that determines an allocation of the privacy budget to each of the combinations including the data items selected by the selection unit; and

an aggregation execution unit that, for each of the combinations, adds noise based on differential privacy criteria to the aggregation results within the allocated privacy budget determined based on the determined allocation, and executes aggregation targeting the aggregation pattern.

[8] An information system comprising a first device and a second device, both holding user data including a user ID and attribute information related to a user, wherein the first device, when executing aggregation targeting an aggregation pattern including multiple combinations of data items contained in the attribute information between the first device and the second device, adds noise based on differential privacy criteria to aggregation results within a privacy budget, and executes aggregation targeting the aggregation pattern, the information system comprising:

the first device comprising:

a relevance calculation unit that calculates relevance between an index related to a purpose of data utilization and the data item contained in the attribute information;

a selection unit that selects data items to be included in the aggregation pattern based on the relevance calculated by the relevance calculation unit;

a determination unit that determines an allocation of the privacy budget to each of the combinations including the data items selected by the selection unit; and

an aggregation execution unit that, for each combination, adds noise based on the differential privacy criteria to the aggregation results within the allocated privacy budget determined based on the determined allocation, and executes aggregation targeting the aggregation pattern,

the second device comprising:

an information provision unit that cooperates with the determination unit to provide information necessary for determination of the allocation of the privacy budget by the determination unit; and

an aggregate output unit that cooperates with the aggregation execution unit to provide information necessary for aggregation by the aggregation execution unit, and performs decryption and output of the aggregation results.

[9] An information system comprising a plurality of devices, each holding user data including a user ID and attribute information related to a user, wherein each device, when executing aggregation targeting an aggregation pattern including multiple combinations of data items contained in the attribute information between the device itself and a counterpart device, adds noise based on differential privacy criteria to aggregation results within a privacy budget, and executes aggregation targeting the aggregation pattern, the information system comprising:

each device comprising:

a relevance calculation unit that calculates relevance between an index related to a purpose of data utilization and the data item contained in the attribute information;

a selection unit that selects data items to be included in the aggregation pattern based on the relevance calculated by the relevance calculation unit;
a determination unit that determines an allocation of the privacy budget to each of the combinations including the data items selected by the selection unit; and
an aggregation execution unit that, for each of the combinations, adds noise based on the differential privacy criteria to the aggregation results within the allocated privacy budget determined based on the determined allocation, and executes aggregation targeting the aggregation pattern.

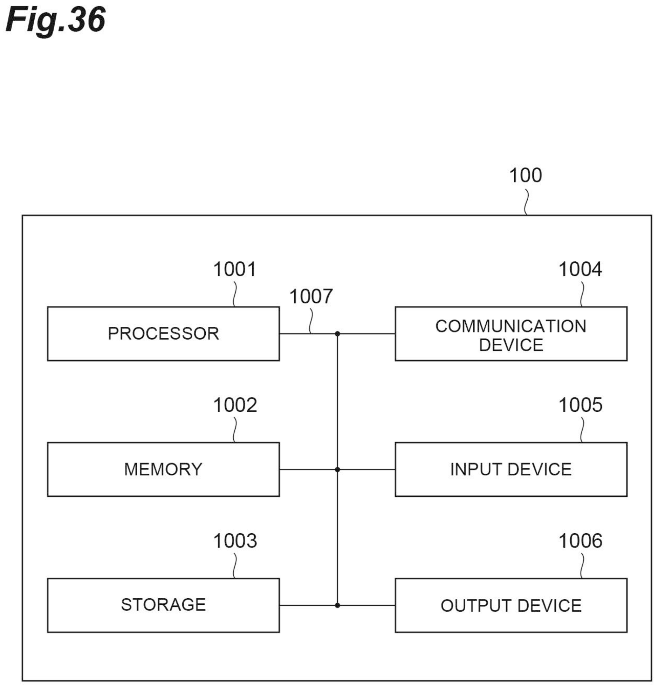

(Explanation of terms, description of hardware configuration (FIG. 36), etc.)

In the block diagrams with reference to which the embodiment has been described, blocks of functional units are illustrated. Such functional blocks (component units) are realized by an arbitrary combination of at least one of hardware and software. In addition, a method for realizing each functional block is not particularly limited. In other words, each functional block may be realized by using one device that is combined physically or logically or using a plurality of devices by directly or indirectly (for example, using a wire or wirelessly) connecting two or more devices separated physically or logically. A functional block may be realized by one device or a plurality of devices described above and software in combination.

The functions include determining, deciding, determination, calculating, computing, processing, deriving, investigating, searching, ascertaining, receiving, transmitting, outputting, accessing, resolving, selecting, choosing, establishing, comparing, supposing, expecting, considering, broadcasting, notifying, communicating, forwarding, configuring, reconfiguring, allocating or mapping, and assigning, but are not limited thereto. For example, a functional block (component) that causes transmission to function is called a transmitting unit or transmitter. In either case, as described above, implementation methods are not particularly limited.

For example, the information processing device according to an embodiment of the present disclosure may function as a computer that performs processing of the present disclosure. FIG. 36 is a diagram illustrating an example of a hardware configuration of the information processing device 10 according to the embodiment of the present disclosure. The above-described information processing device 10 may be physically configured as a computer device including a processor 1001, a memory 1002, a storage 1003, a communication device 1004, an input device 1005, an output device 1006, a bus 1007, and the like.

In addition, in the following description, the term "device" may be rephrased as a circuit, a device, a unit, or the like. The hardware configuration of the information processing device 10 may be configured to include one or more of respective devices shown in FIG. 36, or may be configured not to include some of the devices.

Each function in the information processing device 10 is realized by loading predetermined software (a program) into hardware such as the processor 1001 and the memory 1002 so that the processor 1001 performs calculation to control communication that is performed by the communication device 1004 and/or control at least one of reading and writing of data in the memory 1002 and the storage 1003.

The processor 1001, for example, controls the entire computer by executing an operating system. The processor 1001 may be configured as a central processing unit (CPU) including an interface with peripherals, a controller, an arithmetic operation unit, and a register.

The processor 1001 reads a program (a program code), a software module, data, or the like from the storage 1003 and/or the communication device 1004 into the memory 1002 and performs various processes in accordance therewith. As the program, a program that causes a computer to perform at least some of the operations described above in the embodiment is used. The various processes described above are described as being performed by a single processor 1001, but they may be simultaneously or sequentially performed by two or more processors 1001. The processor 1001 may be implemented as one or more chips. The program may be transmitted from a network via an telecommunication line.

The memory 1002 is a computer-readable recording medium and may be constituted by, for example, at least one of a read only memory (ROM), an erasable programmable ROM (EPROM), an electrically erasable programmable ROM (EEPROM), and a random access memory (RAM). The memory 1002 may be referred to as a register, a cache, a main memory (main storage device), or the like. The memory 1002 can store an executable program (program code), a software module, or the like that can be executed to perform a wireless communication method according to an embodiment of the present disclosure.

The storage 1003 is a computer-readable recording medium and may be configured by, for example, at least one of an optical disc such as a compact disc ROM (CD-ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may be referred to as an auxiliary storage device. The storage medium described above, for example, may be a database including at least one of the memory 1002 and the storage 1003, a server, or any other appropriate medium.

The communication device 1004 is hardware (a transmitting and receiving device) that performs communication between computers via a wired or wireless network and is also referred to as, for example, a network device, a network controller, a network card, or a communication module. The communication device 1004, for example, in order to realize at least one of frequency division duplex (FDD) and time division duplex (TDD), may be configured to include a high frequency switch, a duplexer, a filter, a frequency synthesizer, and the like.

The input device 1005 is an input device (for example, a keyboard, a mouse, a microphone, a switch, a button, a sensor, or the like) that accepts an input from the outside. The output device 1006 is an output device (for example, a display, a speaker, an LED lamp, or the like) that performs output to the outside. In addition, the input device 1005 and the output device 1006 may have an integrated configuration (for example, a touch panel).

The devices such as the processor 1001 and the memory 1002 are connected to each other via the bus 1007 for communication of information. The bus 1007 may be configured using a single bus, or may be configured using different buses for each device.

In addition, the information processing device 10 may be configured to include hardware such as a microprocessor, a digital signal processor (DSP), an application specific integrated circuit (ASIC), a programmable logic device (PLD), a field programmable gate array (FPGA), or the like, and a part or the whole of each functional block may be realized by the hardware. For example, the processor 1001 may be implemented using at least one of these types of hardware.

Notification of information is not limited to an aspect/embodiment described in the present disclosure and may be performed using a different method. For example, the notification of information may be performed using physical layer signaling (for example, downlink control information (DCI), uplink control information (UCI)), upper layer signaling (for example, radio resource control (RRC) signaling, medium access control (MAC) signaling, a master information block (MIB), a system information block (SIB)), any other signal, or a combination thereof. In addition, the RRC signaling may be referred to as an RRC message and, for example, may be an RRC connection setup message, an RRC connection reconfiguration message, or the like.

Each aspect or embodiment described in the present disclosure may be applied to at least one of the following systems: Long Term Evolution (LTE), LTE-Advanced (LTE-A), SUPER 3G, IMT-Advanced, Fourth Generation Mobile Communication System (4G), Fifth Generation Mobile Communication System (5G), Sixth Generation Mobile Communication System (6G), xth Generation Mobile Communication System (xG, where x is, for example, an integer or a decimal), Future Radio Access (FRA), New Radio (NR), New Radio Access (NX), Future Generation Radio Access (FX), Wideband Code Division Multiple Access (W-CDMA, registered trademark), Global System for Mobile Communications (GSM, registered trademark), CDMA2000, Ultra Mobile Broadband (UMB), IEEE 802.11 (Wi-Fi, registered trademark), IEEE 802.16 (WiMAX, registered trademark), IEEE 802.20, Ultra-WideBand (UWB), Bluetooth (registered trademark), systems that use other suitable systems, and at least one next-generation system that has been extended, modified, created, or defined based on any of the above systems. In addition, a plurality of systems may be combined (for example, a combination of at least one of LTE and LTE-A and 5G or the like) for an application.

The order of processes, the sequences, the flowcharts, and the like of the aspects/embodiments described above in the present disclosure may be changed unless conflicts arise. For example, in the methods described in the present disclosure, various steps are described as elements of an exemplified order, but the methods are not limited to the described order.

Information or the like which is input or output may be stored in a specific place (for example, a memory) or may be managed using a management table. Information or the like which is input or output may be overwritten, updated, or appended. The output information and the like may be deleted. The input information and the like may be transmitted to another device.

Determination may be performed using a value (0 or 1) which is expressed by one bit, may be performed using a Boolean value (true or false), or may be performed by comparison of numerical values (for example, comparison thereof with a predetermined value).

The aspects/embodiments described in this disclosure may be used alone, may be used in combination, or may be alternated during implementation thereof. In addition, a notification of predetermined information (for example, a notification of being X) is not limited to be performed explicitly and may be performed implicitly (for example, a notification of the predetermined information is not performed).

As above, while the present disclosure has been described in detail, it is apparent to a person skilled in the art that the present disclosure is not limited to the embodiments described in the present disclosure. The present disclosure may be modified or altered without departing from the spirit and scope of the present disclosure as defined by the claims. Thus, the description presented in the present disclosure is for the purpose of exemplary description and does not have any limiting meaning for the present disclosure.

It is apparent that software, regardless whether it is called software, firmware, middleware, a microcode, a hardware description language, or any other name, should be widely interpreted to mean a command, a command set, a code, a code segment, a program code, a program, a subprogram, a software module, an application, a software application, a software package, a routine, a subroutine, an object, an executable file, an execution thread, a procedure, a function, and the like.

In addition, software, a command, information, and the like may be transmitted and received through a transmission medium. For example, when software is transmitted from a website, a server, or another remote source using at least one of wired technology (such as a coaxial cable, an optical fiber cable, a twisted-pair wire, or a digital subscriber line (DSL)) and wireless technology (such as infrared rays or microwaves), at least one of the wired technology and the wireless technology are included in the definition of a transmission medium.

Information, a signal, and the like described in the present disclosure may be represented using any of various different technologies. For example, data, an instruction, a command, information, a signal, a bit, a symbol, a chip, and the like described over the entire description presented above may be represented using a voltage, a current, radio waves, a magnetic field or magnetic particles, an optical field or photons, or an arbitrary combination thereof.

In addition, a term described in the present disclosure and a term that is necessary for understanding the present disclosure may be substituted with a term having the same meaning or a meaning similar thereto. For example, at least one of a channel and a symbol may be a signal (signaling). For example, a signal may be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be expressed using absolute values, may be expressed using values relative to a predetermined value, or may be expressed using other corresponding information. For example, radio resources may be directed using indices.

A name used for each parameter described above is not limited in any aspect. In addition, numerical equations using such parameters may be different from those that are explicitly disclosed in the present disclosure. Various channels (for example, PUCCH, PDCCH, and the like) and information elements can be identified using any suitable names, and various names assigned to such various channels and information elements are not limited in any aspect.

Terms such as "determining" used in the present disclosure may include a variety of operations of various types. The "determining", for example, may include a case in which judging, calculating, computing, processing, deriving, investigating, looking up, search, and inquiry (for example, looking up a table, a database, or any other data structure), or ascertaining is regarded as "determining." In addition, "determining" may include a case in which receiving (for example, receiving information), transmitting (for example, transmitting information), input, output, or accessing (for example, accessing data in a memory) is regarded as "determining." Furthermore, "determining" may include a case in which resolving, selecting, choosing, establishing, comparing, or the like is regarded as "determining." In other words, "determining" includes a case in which a certain operation is regarded as "determining." In addition, "determining" may be rephrased with "assuming", "expecting", "considering", and the like.

The expression "based on" used in the present disclosure does not mean "based on only" unless otherwise described. In other words, the expression "on the basis of" means both "only on the basis of" and "at least on the basis of."

Any reference to elements, for which names of "first", "second", and the like are used, used in the present disclosure does not generally limit the amount or the sequence of such elements. The terms can be conveniently used to distinguish two or more elements in the present disclosure. Accordingly, referring to the first and second elements does not mean that only the two elements are employed there or the first element precedes the second element in a certain form.

When the terms "include" and "including" and modifications thereof are used in the present disclosure, the terms are intended to have a comprehensive meaning similar to the term "comprising." The term "or" used in the present disclosure is not intended to mean an exclusive OR.

In the present disclosure, for example, when an article such as a, an, or the in English is added in translation, the present disclosure may include a case in which a noun subsequent to the article is of a plural type.

In the present disclosure, a term "A and B are different" may mean that "A and B are respectively different from each other." The expression may mean that "A and B are different from C." Expressions such as "separate" and "couple" may be construed in the same way as "different."

## Reference Signs List

11: data input unit, 12: preliminary execution data generation unit, 12a: data processing unit, 12b: anonymization processing unit, 12c: id irreversible conversion unit, 12d: encryption unit, 12e: data transmission/reception unit, 13: basic value calculation unit, 13a: data matching unit, 13b: aggregation processing unit, 13c: disclosure limitation processing unit, 13d: calculation unit, 14a: basic aggregation information acquisition unit, 14b: basic aggregation information provision unit, 15: estimation unit, 16: evaluation unit, 17: allocation determination unit, 21: anonymization processing unit, 22: id irreversible conversion unit, 23: encryption unit, 23a: id encryption unit, 23b: attribute information encryption unit, 24: data transmission/reception unit, 25: data matching unit, 26: aggregation processing unit, 27: disclosure limitation processing unit, 28: decryption unit, 100: information processing device, 101: relevance calculation unit, 102: selection unit, 103: determination unit, 104: aggregation execution unit, 200: information processing device, 201: information provision unit, 202: aggregate output unit, 1001: processor, 1002: memory, 1003: storage, 1004: communication device, 1005: input device, 1006: output device, 1007: bus.

# EP 4 700 685 A1

**Claims**

1. An information processing device that, when executing aggregation targeting an aggregation pattern including multiple combinations of data items contained in attribute information between the information processing device itself and a counterpart device, both holding user data including a user ID and the attribute information related to a user, adds noise based on differential privacy criteria to aggregation results within a privacy budget, and executes the aggregation targeting the aggregation pattern, comprising:

   a relevance calculation unit that calculates relevance between an index related to a purpose of data utilization and the data item contained in the attribute information; and
   a selection unit that selects data items to be included in the aggregation pattern based on the relevance calculated by the relevance calculation unit.

2. The information processing device according to claim 1, wherein the relevance calculation unit generates a prediction model of machine learning using the index as an objective variable and the data item contained in the attribute information as an explanatory variable, and calculates the relevance based on the obtained prediction model.

3. The information processing device according to claim 1, wherein the relevance calculation unit calculates a correlation coefficient between the index and the data item contained in the attribute information, and uses the calculated correlation coefficient as the relevance.

4. The information processing device according to claim 1, wherein the relevance calculation unit calculates the relevance between the index and each of the data items contained in the attribute information, targeting each category obtained by classifying the data items into multiple categories, and the selection unit selects the data items to be included in the aggregation pattern based on the relevance of each data item for each category.

5. The information processing device according to claim 4, wherein the selection unit identifies categories with high relevance based on predetermined criteria, and selects the data items to be included in the aggregation pattern based on the number of the categories with high relevance for each data item.

6. The information processing device according to claim 4, wherein the selection unit identifies categories with high relevance based on predetermined criteria, and selects the categories with high relevance as the data items to be included in the aggregation pattern.

7. The information processing device according to claim 1, further comprising:

   a determination unit that determines an allocation of the privacy budget to each of the combinations including the data items selected by the selection unit; and
   an aggregation execution unit that, for each of the combinations, adds noise based on differential privacy criteria to the aggregation results within the allocated privacy budget determined based on the determined allocation, and executes aggregation targeting the aggregation pattern.

8. An information system comprising a first device and a second device, both holding user data including a user ID and attribute information related to a user, wherein the first device, when executing aggregation targeting an aggregation pattern including multiple combinations of data items contained in the attribute information between the first device and the second device, adds noise based on differential privacy criteria to aggregation results within a privacy budget, and executes aggregation targeting the aggregation pattern, the information system comprising:

   the first device comprising:

      a relevance calculation unit that calculates relevance between an index related to a purpose of data utilization and the data item contained in the attribute information;
      a selection unit that selects data items to be included in the aggregation pattern based on the relevance calculated by the relevance calculation unit;
      a determination unit that determines an allocation of the privacy budget to each of the combinations including the data items selected by the selection unit; and
      an aggregation execution unit that, for each combination, adds noise based on the differential privacy criteria to the aggregation results within the allocated privacy budget determined based on the determined

23

allocation, and executes aggregation targeting the aggregation pattern,

the second device comprising:

an information provision unit that cooperates with the determination unit to provide information necessary for determination of the allocation of the privacy budget by the determination unit; and
an aggregate output unit that cooperates with the aggregation execution unit to provide information necessary for aggregation by the aggregation execution unit, and performs decryption and output of the aggregation results.

9. An information system comprising a plurality of devices, each holding user data including a user ID and attribute information related to a user, wherein each device, when executing aggregation targeting an aggregation pattern including multiple combinations of data items contained in the attribute information between the device itself and a counterpart device, adds noise based on differential privacy criteria to aggregation results within a privacy budget, and executes aggregation targeting the aggregation pattern, the information system comprising:
each device comprising:

a relevance calculation unit that calculates relevance between an index related to a purpose of data utilization and the data item contained in the attribute information;
a selection unit that selects data items to be included in the aggregation pattern based on the relevance calculated by the relevance calculation unit;
a determination unit that determines an allocation of the privacy budget to each of the combinations including the data items selected by the selection unit; and
an aggregation execution unit that, for each of the combinations, adds noise based on the differential privacy criteria to the aggregation results within the allocated privacy budget determined based on the determined allocation, and executes aggregation targeting the aggregation pattern.

## Fig.1

100

INFORMATION
PROCESSING DEVICE

RELEVANCE
CALCULATION UNIT — 101

SELECTION UNIT — 102

**Fig.2**

DATA OF COMPANY A

| USER ID | PURCHASED OR NOT (ITEM A) | AGE GROUP (ITEM B) | RESIDENCE REGION (ITEM C) | NUMBER OF COHABITANTS (ITEM D) |
|---|---|---|---|---|
| aaa | YES | 30S | KANTO | 2 COHABITANTS |
| ddd | NO | 50S | KINKI | 3 OR MORE COHABITANTS |
| ggg | YES | 40S | TOHOKU | 3 OR MORE COHABITANTS |
| jjj | NO | UNDER 10S | KYUSHU | 1 COHABITANT |
| mmm | NO | OVER 70S | SHIKOKU | 1 COHABITANT |
| ⋮ | ⋮ | ⋮ | ⋮ | ⋮ |

USER ID      ATTRIBUTE INFORMATION

DATA OF COMPANY B

| USER ID | GENDER (ITEM E) |
|---|---|
| aaa | MALE |
| bbb | MALE |
| ccc | FEMALE |
| ddd | FEMALE |
| eee | MALE |
| ⋮ | ⋮ |

USER ID      ATTRIBUTE INFORMATION

EP 4 700 685 A1

# Fig.3

```
                    ┌─────────────┐
                    │    START    │
                    └──────┬──────┘
                           │
        ┌──────────────────┴──────────────────┐
        │     CALCULATION OF RELEVANCE         │~ST1
        │   BETWEEN INDEX AND DATA ITEM        │
        └──────────────────┬──────────────────┘
                           │
        ┌──────────────────┴──────────────────┐
        │       SELECTION OF DATA ITEM         │~ST2
        │         BASED ON RELEVANCE           │
        └──────────────────┬──────────────────┘
                           │
                    ┌──────┴──────┐
                    │     END     │
                    └─────────────┘
```

# Fig.4

DATA OF COMPANY A

| USER ID | PURCHASED OR NOT (ITEM A) | AGE GROUP (ITEM B) | RESIDENCE REGION (ITEM C) |
|---|---|---|---|
| aaa | YES | 30S | KANTO |
| ddd | NO | 50S | KINKI |
| ggg | YES | 40S | TOHOKU |
| jjj | NO | UNDER 10S | KYUSHU |
| mmm | NO | OVER 70S | SHIKOKU |
| ⋮ | ⋮ | ⋮ | ⋮ |

USER ID — ATTRIBUTE INFORMATION

DATA OF COMPANY B

| USER ID | GENDER (ITEM E) |
|---|---|
| aaa | MALE |
| bbb | MALE |
| ccc | FEMALE |
| ddd | FEMALE |
| eee | MALE |
| ⋮ | ⋮ |

USER ID — ATTRIBUTE INFORMATION

*Fig.5*

## Fig.6

FROM SELECTION UNIT 102

DATA INPUT UNIT — 11

PRELIMINARY EXECUTION DATA GENERATION UNIT

DATA PROCESSING UNIT — 12 / 12A

ANONYMIZATION PROCESSING UNIT — 12B

ID IRREVERSIBLE CONVERSION UNIT — 12C

ENCRYPTION UNIT — 12D

DATA TRANSMISSION/RECEPTION UNIT — 12E

BASIC VALUE CALCULATION UNIT

DATA MATCHING UNIT — 13 / 13A

13B — AGGREGATION PROCESSING UNIT

13C — DISCLOSURE LIMITATION PROCESSING UNIT

13D — CALCULATION UNIT

14A — BASIC AGGREGATION INFORMATION ACQUISITION UNIT

15 — ESTIMATION UNIT

16 — EVALUATION UNIT

17 — ALLOCATION DETERMINATION UNIT

DETERMINATION UNIT — 103

TO AGGREGATION EXECUTION UNIT 104

X

DATA INPUT UNIT — 11

PRELIMINARY EXECUTION DATA GENERATION UNIT

DATA PROCESSING UNIT — 12 / 12A

ANONYMIZATION PROCESSING UNIT — 12B

ID IRREVERSIBLE CONVERSION UNIT — 12C

ENCRYPTION UNIT — 12D

DATA TRANSMISSION/RECEPTION UNIT — 12E

14B — BASIC AGGREGATION INFORMATION PROVISION UNIT

INFORMATION PROVISION UNIT

201

EP 4 700 685 A1

**Fig.7**

STATISTICAL INFORMATION

EP 4 700 685 A1

**Fig.8**

```
        DEVICE OF COMPANY A                                          DEVICE OF COMPANY B
               │                                                            │
   ┌───────────────────────────┐                                           │
   │  CALCULATION OF RELEVANCE  │──ST1                                      │
   │ BETWEEN INDEX AND DATA ITEM│                                           │
   └───────────────────────────┘                                           │
               │                                                            │
   ┌───────────────────────────┐                                           │
   │   SELECTION OF DATA ITEM   │──ST2                                      │
   │    BASED ON RELEVANCE      │                                           │
   └───────────────────────────┘                                           │
               │                                                            │
   ┌───────────────────────────┐        ┌──────────────────────────────┐
   │  DETERMINATION OF PRIVACY  │◄──────►│ PROCESSING FOR DETERMINATION OF│──ST3
   │    BUDGET ALLOCATION       │        │   PRIVACY BUDGET ALLOCATION    │
   └───────────────────────────┘        └──────────────────────────────┘
               │                                                            │
   ┌───────────────────────────┐        ┌──────────────────────────────┐
   │  AGGREGATION PROCESSING    │◄──────►│   PROCESSING FOR AGGREGATION   │──ST4
   │ TARGETING AGGREGATION PATTERN│      │ TARGETING AGGREGATION PATTERN  │
   └───────────────────────────┘        └──────────────────────────────┘
               │                                                            │
            ( END )                                                      ( END )
```

EP 4 700 685 A1

# Fig.9

DEVICE OF COMPANY A — ST3 — DEVICE OF COMPANY B

DATA INPUT — S1 ; S2 — DATA INPUT

**GENERATION OF PRELIMINARY EXECUTION DATA (S3)**
- DATA PROCESSING — S3A
- ANONYMIZATION PROCESSING — S3B
- ID IRREVERSIBLE CONVERSION — S3C
- ENCRYPTION OF ID — S3D
- TRANSMISSION/RECEPTION OF ENCRYPTED ID — S3E
- RE-ENCRYPTION OF ID — S3F
- RECEPTION OF ENCRYPTED ID — S3G

**GENERATION OF PRELIMINARY EXECUTION DATA (S4)**
- DATA PROCESSING — S4A
- ANONYMIZATION PROCESSING — S4B
- ID IRREVERSIBLE CONVERSION — S4C
- ENCRYPTION OF ID — S4D
- ENCRYPTION OF ATTRIBUTE INFORMATION — S4E
- TRANSMISSION/RECEPTION OF ENCRYPTED ID — S4F
- RE-ENCRYPTION OF ID — S4G
- TRANSMISSION OF ENCRYPTED ID — S4H

- DATA MATCHING — S5
- AGGREGATION PROCESSING — S6
- DISCLOSURE LIMITATION PROCESSING — S7
- CALCULATION OF BASIC VALUE — S8

EXECUTION OF BASIC AGGREGATION — S9

EXECUTION OF BASIC AGGREGATION — S10

- ACQUISITION OF BASIC AGGREGATION INFORMATION — S11
- ESTIMATION OF AGGREGATION RESULT — S12
- EVALUATION OF INFLUENCE OF NOISE — S13
- DETERMINATION OF PRIVACY BUDGET ALLOCATION — S14

EP 4 700 685 A1

# Fig.10

AGGREGATION PATTERN = {ITEM A × B × E, ITEM A × D × E}

| ITEM A | ITEM B | ITEM E | AGGREGATION RESULT |
|---|---|---|---|
| YES | UNDER 10S | MALE | |
| NO | UNDER 10S | MALE | |
| ⋮ | ⋮ | ⋮ | |
| YES | OVER 70S | FEMALE | |
| NO | OVER 70S | FEMALE | |

AGGREGATION(1)

| ITEM A | ITEM D | ITEM E | AGGREGATION RESULT |
|---|---|---|---|
| YES | 1 COHABITANT | MALE | |
| NO | 1 COHABITANT | MALE | |
| ⋮ | ⋮ | ⋮ | |
| YES | 3 OR MORE COHABITANTS | FEMALE | |
| NO | 3 OR MORE COHABITANTS | FEMALE | |

AGGREGATION(2)

# Fig.11

EP 4 700 685 A1

DATA INPUT (S1, S2)

GENERATION OF PRELIMINARY EXECUTION DATA (S3, S4)

DATA MATCHING (S5) AGGREGATION PROCESSING (S6)

DISCLOSURE LIMITATION PROCESSING (S7) CALCULATION OF BASIC VALUE (S8)

<DATA OF COMPANY A>

INPUT DATA OF STEP S1

| USER ID |
|---------|
| aaa |
| ddd |
| ggg |
| jjj |
| mmm |
| ⋮ |

×

<DATA OF COMPANY B>

INPUT DATA OF STEP S2

| USER ID | ITEM E |
|---------|--------|
| aaa | MALE |
| bbb | MALE |
| ccc | FEMALE |
| ddd | FEMALE |
| eee | MALE |
| ⋮ | ⋮ |

| ITEM E | AGGREGATION RESULT |
|--------|--------------------|
| MALE | Num1 |
| FEMALE | Num2 |

+

NOISE ADDITION
(EXAMPLE: CONSUME 0.1 FROM PRIVACY BUDGET ε_total=1)

DATA MATCHING RATE 40%

MALE RATIO IN MATCHED DATA 45%

| ITEM E | AGGREGATION RESULT |
|--------|--------------------|
| MALE | Num1' |
| FEMALE | Num2' |
| SUM | Sum |

# Fig.12

（BOTH COMPANY A AND COMPANY B）DATA PROCESSING

DATA OF COMPANY A

| USER ID | ITEM A | ITEM B | ITEM C | ITEM D |
|---|---|---|---|---|
| aaa | YES | 30S | KANTO | 2 COHABITANTS |
| ddd | NO | 50S | KINKI | 3 OR MORE COHABITANTS |
| ggg | YES | 40S | TOHOKU | 3 OR MORE COHABITANTS |
| jjj | NO | UNDER 10S | KYUSHU | 1 COHABITANT |
| mmm | NO | OVER 70S | SHIKOKU | 1 COHABITANT |
| ⋮ | ⋮ | ⋮ | ⋮ | ⋮ |

USER ID — ATTRIBUTE INFORMATION

DATA OF COMPANY B

| USER ID | ITEM E |
|---|---|
| aaa | MALE |
| bbb | MALE |
| ccc | FEMALE |
| ddd | FEMALE |
| eee | MALE |
| ⋮ | ⋮ |

USER ID — ATTRIBUTE INFORMATION

DATA PROCESSING

| USER ID |
|---|
| aaa |
| ddd |
| ggg |
| jjj |
| mmm |
| ⋮ |

DATA PROCESSING

| USER ID | ITEM E |
|---|---|
| aaa | MALE |
| bbb | MALE |
| ccc | FEMALE |
| ddd | FEMALE |
| eee | MALE |
| ⋮ | ⋮ |

# Fig.13

(BOTH COMPANY A AND COMPANY B)
ID IRREVERSIBLE CONVERSION

DATA OF COMPANY A

| USER ID |
|---------|
| aaa |
| ddd |
| ggg |
| jjj |
| mmm |
| ⋮ |

DATA OF COMPANY B

| USER ID | ITEM E |
|---------|--------|
| aaa | MALE |
| bbb | MALE |
| ccc | FEMALE |
| ddd | FEMALE |
| eee | MALE |
| ⋮ | ⋮ |

ID IRREVERSIBLE CONVERSION

ID IRREVERSIBLE CONVERSION

| ANONYMIZED HASH |
|-----------------|
| afewf34g ⋯ |
| 33fdef5d ⋯ |
| cf2k1w52 ⋯ |
| ab6g9b36 ⋯ |
| fe741geb ⋯ |
| ⋮ |

| ANONYMIZED HASH | ITEM E |
|-----------------|--------|
| afewf34g ⋯ | MALE |
| bf21fcb6 ⋯ | MALE |
| hg42e9ah ⋯ | FEMALE |
| 33fdef5d ⋯ | FEMALE |
| 4e1cc8a8 ⋯ | MALE |
| ⋮ | ⋮ |

# Fig.14

## (BOTH COMPANY A AND COMPANY B)ID ENCRYPTION

DATA OF COMPANY A

| ANONYMIZED HASH |
|---|
| afewf34g ··· |
| 33fdef5d ··· |
| cf2k1w52 ··· |
| ab6g9b36 ··· |
| fe741geb ··· |
| ⋮ |

DATA OF COMPANY B

| ANONYMIZED HASH | ITEM E |
|---|---|
| afewf34g ··· | MALE |
| bf21fcb6 ··· | MALE |
| hg42e9ah ··· | FEMALE |
| 33fdef5d ··· | FEMALE |
| 4e1cc8a8 ··· | MALE |
| ⋮ | ⋮ |

ID ENCRYPTION

ID ENCRYPTION

ID-ENCRYPTED DATA OF COMPANY A

| ENCRYPTED ID |
|---|
| 🔒$^a$ afewf34g ··· |
| 🔒$^a$ 33fdef5d ··· |
| 🔒$^a$ cf2k1w52 ··· |
| 🔒$^a$ ab6g9b36 ··· |
| 🔒$^a$ fe741geb ··· |
| ⋮ |

ID-ENCRYPTED DATA OF COMPANY B

| ENCRYPTED ID | ITEM E |
|---|---|
| 🔒$^b$ afewf34g ··· | MALE |
| 🔒$^b$ bf21fcb6 ··· | MALE |
| 🔒$^b$ hg42e9ah ··· | FEMALE |
| 🔒$^b$ 33fdef5d ··· | FEMALE |
| 🔒$^b$ 4e1cc8a8 ··· | MALE |
| ⋮ | ⋮ |

# Fig.15

(a)

(IN DEVICE OF COMPANY B)
ENCRYPTION OF ATTRIBUTE INFORMATION

ID-ENCRYPTED DATA OF COMPANY B

| ENCRYPTED ID | ITEM E |
|---|---|
| 🔒$^b$ afewf34g ⋯ | MALE |
| 🔒$^b$ bf21fcb6 ⋯ | MALE |
| 🔒$^b$ hg42e9ah ⋯ | FEMALE |
| 🔒$^b$ 33fdef5d ⋯ | FEMALE |
| 🔒$^b$ 4e1cc8a8 ⋯ | MALE |
| ⋮ | ⋮ |

ENCRYPTION OF ATTRIBUTE INFORMATION ⟹

ENCRYPTED USER DATA OF COMPANY B

| ENCRYPTED ID | ITEM E |
|---|---|
| 🔒$^b$ afewf34g ⋯ | 🔒$^B$ MALE |
| 🔒$^b$ bf21fcb6 ⋯ | 🔒$^B$ MALE |
| 🔒$^b$ hg42e9ah ⋯ | 🔒$^B$ FEMALE |
| 🔒$^b$ 33fdef5d ⋯ | 🔒$^B$ FEMALE |
| 🔒$^b$ 4e1cc8a8 ⋯ | 🔒$^B$ MALE |
| ⋮ | ⋮ |

(b)

(BOTH COMPANY A AND COMPANY B)
TRANSMISSION/RECEPTION OF ENCRYPTED ID

ENCRYPTED ID OF COMPANY A

| ENCRYPTED ID |
|---|
| 🔒$^a$ afewf34g ⋯ |
| 🔒$^a$ 33fdef5d ⋯ |
| 🔒$^a$ cf2k1w52 ⋯ |
| 🔒$^a$ ab6g9b36 ⋯ |
| 🔒$^a$ fe741geb ⋯ |
| ⋮ |

TRANSMISSION TO COMPANY B ⟹

TRANSMISSION TO COMPANY A ⟸

ENCRYPTED USER DATA OF COMPANY B

| ENCRYPTED ID | ITEM E |
|---|---|
| 🔒$^b$ afewf34g ⋯ | 🔒$^B$ MALE |
| 🔒$^b$ bf21fcb6 ⋯ | 🔒$^B$ MALE |
| 🔒$^b$ hg42e9ah ⋯ | 🔒$^B$ FEMALE |
| 🔒$^b$ 33fdef5d ⋯ | 🔒$^B$ FEMALE |
| 🔒$^b$ 4e1cc8a8 ⋯ | 🔒$^B$ MALE |
| ⋮ | ⋮ |

# *Fig.16*

## (BOTH COMPANY A AND COMPANY B) RE-ENCRYPTION OF ID

ENCRYPTED ID OF COMPANY B

| ENCRYPTED ID |
|---|
| 🔒$^b$ afewf34g ··· |
| 🔒$^b$ bf21fcb6 ··· |
| 🔒$^b$ hg42e9ah ··· |
| 🔒$^b$ 33fdef5d ··· |
| 🔒$^b$ 4e1cc8a8 ··· |
| ⋮ |

ENCRYPTED ID OF COMPANY A

| ENCRYPTED ID |
|---|
| 🔒$^a$ afewf34g ··· |
| 🔒$^a$ 33fdef5d ··· |
| 🔒$^a$ cf2k1w52 ··· |
| 🔒$^a$ ab6g9b36 ··· |
| 🔒$^a$ fe741geb ··· |
| ⋮ |

ID ENCRYPTION

ID ENCRYPTION

ENCRYPTED ID OF COMPANY B

| ENCRYPTED ID |
|---|
| 🔒$^{ba}$ afewf34g ··· |
| 🔒$^{ba}$ bf21fcb6 ··· |
| 🔒$^{ba}$ hg42e9ah ··· |
| 🔒$^{ba}$ 33fdef5d ··· |
| 🔒$^{ba}$ 4e1cc8a8 ··· |
| ⋮ |

ENCRYPTED ID OF COMPANY A

| ENCRYPTED ID |
|---|
| 🔒$^{ab}$ afewf34g ··· |
| 🔒$^{ab}$ 33fdef5d ··· |
| 🔒$^{ab}$ cf2k1w52 ··· |
| 🔒$^{ab}$ ab6g9b36 ··· |
| 🔒$^{ab}$ fe741geb ··· |
| ⋮ |

※ENCRYPTED ID OF COMPANY A AFTER RE-ENCRYPTION IS
TRANSMITTED FROM DEVICE OF COMPANY B TO DEVICE OF COMPANY A

# *Fig.17*

(IN DEVICE OF COMPANY A) DATA MATCHING

ENCRYPTED ID OF COMPANY A

| ENCRYPTED ID |
|---|
| 🔒 ab  afewf34g ⋯ |
| 🔒 ab  33fdef5d ⋯ |
| 🔒 ab  cf2k1w52 ⋯ |
| 🔒 ab  ab6g9b36 ⋯ |
| 🔒 ab  fe741geb ⋯ |
| ⋮ |

MATCHING ⟺

ENCRYPTED USER DATA OF COMPANY B

| ENCRYPTED ID | ITEM E |
|---|---|
| 🔒 ba  afewf34g ⋯ | 🔒 B  MALE |
| 🔒 ba  bf21fcb6 ⋯ | 🔒 B  MALE |
| 🔒 ba  hg42e9ah ⋯ | 🔒 B FEMALE |
| 🔒 ba  33fdef5d ⋯ | 🔒 B FEMALE |
| 🔒 ba  4e1cc8a8 ⋯ | 🔒 B  MALE |
| ⋮ | ⋮ |

⬇

ENCRYPTED MATCHED DATA

| ITEM E |
|---|
| 🔒 B  MALE |
| 🔒 B FEMALE |
| 🔒 B FEMALE |
| ⋮ |

※ENCRYPTED ID IS DELETED AFTER MATCHING

## Fig.18

**EXECUTION OF BASIC AGGREGATION(S9, S10) ACQUISITION OF BASIC AGGREGATION INFORMATION(S11)**

**ESTIMATION OF AGGREGATION RESULT(S12)**

SAMPLE SIZE(ESTIMATED VALUE)
=SAMPLE SIZE BY GENDER AND PURCHASED/NOT PURCHASED IN DATA OF COMPANY A
× MALE/FEMALE RATE IN DATA OF COMPANY B
×DATA MATCHING RATE

MALE/FEMALE RATE IN DATA OF COMPANY B IS APPROPRIATELY ADJUSTED BASED ON DIFFERENCE(DATA BIAS)FROM MALE/FEMALE RATE IN MATCHED DATA

<DATA OF COMPANY A>

INPUT DATA OF STEP S1

AGGREGATION (1)～(2)

| ITEM A | ITEM B | SAMPLE SIZE |
|--------|--------|-------------|
| YES | UNDER 10S | Sa1 |
| NO | UNDER 10S | Sa2 |
| ⋮ | ⋮ | ⋮ |
| YES | OVER 70S | Sa13 |
| NO | OVER 70S | Sa14 |

<DATA OF COMPANY B>

INPUT DATA OF STEP S2

× 

AGGREGATION (1)～(2)

| ITEM E | RATIO |
|--------|-------|
| MALE | 45% |
| FEMALE | 55% |

| ITEM A | ITEM B | ITEM E | SAMPLE SIZE (ESTIMATED VALUE) |
|--------|--------|--------|-------------------------------|
| YES | UNDER 10S | MALE | n1 |
| YES | UNDER 10S | FEMALE | n2 |
| NO | UNDER 10S | MALE | n3 |
| NO | UNDER 10S | FEMALE | n4 |
| ⋮ | ⋮ | ⋮ | ⋮ |
| NO | OVER 70S | MALE | n27 |
| NO | OVER 70S | FEMALE | n28 |
| MEDIAN VALUE | | | m1 |
| MEDIAN VALUE | | | m2 |

EP 4 700 685 A1

# Fig.19

EP 4 700 685 A1

EVALUATION OF INFLUENCE OF NOISE (S13)

| AGGREGA-TION | MEDIAN OF ESTIMATED SAMPLE SIZE | INFLUENCE OF NOISE $z$ $V[\frac{n+z}{n}]=\frac{2}{(n\varepsilon)^2}$ |
|---|---|---|
| AGGREGA-TION (1) ITEM $A \times B \times E$ | m1 | $\frac{2}{(m1 \times \varepsilon_{a1})^2}$ |
| AGGREGA-TION (2) ITEM $A \times D \times E$ | m2 | $\frac{2}{(m2 \times \varepsilon_{a2})^2}$ |

DETERMINATION OF PRIVACY BUDGET ALLOCATION (S14)

TOTAL $0.9 = \varepsilon_{total}$

| AGGREGA-TION | MEDIAN OF ESTIMATED SAMPLE SIZE | BUDGET ALLOCA-TION $\varepsilon$ | INFLUENCE OF NOISE $z$ $V[\frac{n+z}{n}]=\frac{2}{(n\varepsilon)^2}$ |
|---|---|---|---|
| AGGREGA-TION (1) ITEM $A \times B \times E$ | m1 | $\varepsilon_{a1}$ | $V_{a1}$ |
| AGGREGA-TION (2) ITEM $A \times D \times E$ | m2 | $\varepsilon_{a2}$ | $V_{a2}$ |

TO EQUALIZE INFLUENCE OF NOISE, ALLOCATE REMAINING PRIVACY BUDGET $\varepsilon_{total}=0.9$ INVERSELY PROPORTIONAL TO INFLUENCE OF NOISE

$$\varepsilon_{a1} : \varepsilon_{a2} = \frac{1}{m1} : \frac{1}{m2}$$

INFLUENCE OF NOISE IN AGGREGATIONS (1) TO (2) PROVES TO BE EQUAL ($V_{a1} = V_{a2}$)

## Fig.20

~ ST4

| DEVICE OF COMPANY A | DEVICE OF COMPANY B |
|---|---|

A1 — INPUT OF USER DATA TO BE AGGREGATED

A2 — ANONYMIZATION PROCESSING

A3 — ID IRREVERSIBLE CONVERSION

A4 — ID ENCRYPTION

A5 — TRANSMISSION/ RECEPTION OF ENCRYPTED ID

A6 — ID RE-ENCRYPTION

A7 — RECEPTION OF ENCRYPTED ID

A8 — DATA MATCHING

A9 — AGGREGATION PROCESSING

A10 — DISCLOSURE LIMITATION PROCESSING

A11 — TRANSMISSION OF ENCRYPTED STATISTICAL INFORMATION

END

B1 — INPUT OF USER DATA TO BE AGGREGATED

B2 — ANONYMIZATION PROCESSING

B3 — ID IRREVERSIBLE CONVERSION

B4 — ID ENCRYPTION

B5 — ENCRYPTION OF ATTRIBUTE INFORMATION

B6 — TRANSMISSION/ RECEPTION OF ENCRYPTED ID

B7 — ID RE-ENCRYPTION

B8 — TRANSMISSION OF ENCRYPTED ID

B9 — RECEPTION OF ENCRYPTED STATISTICAL INFORMATION

B10 — DECRYPTION AND OUTPUT

END

# Fig.21

EP 4 700 685 A1

(BOTH COMPANY A AND COMPANY B)ID IRREVERSIBLE CONVERSION

DATA OF COMPANY A

| USER ID | PURCHASED OR NOT | AGE GROUP | RESIDENCE REGION | NUMBER OF COHABITANTS |
|---|---|---|---|---|
| aaa | YES | 30S | KANTO | 2 COHABITANTS |
| ddd | NO | 50S | KINKI | 3 OR MORE COHABITANTS |
| ggg | YES | 40S | TOHOKU | 3 OR MORE COHABITANTS |
| jjj | NO | UNDER 10S | KYUSHU | 1 COHABITANT |
| mmm | NO | OVER 70S | SHIKOKU | 1 COHABITANT |
| ⋮ | ⋮ | ⋮ | ⋮ | ⋮ |

DATA OF COMPANY B

| USER ID | GENDER |
|---|---|
| aaa | MALE |
| bbb | MALE |
| ccc | FEMALE |
| ddd | FEMALE |
| eee | MALE |
| ⋮ | ⋮ |

ID IRREVERSIBLE CONVERSION

ID IRREVERSIBLE CONVERSION

DATA OF COMPANY A

| ANONYMIZED HASH | PURCHASED OR NOT | AGE GROUP | RESIDENCE REGION | NUMBER OF COHABITANTS |
|---|---|---|---|---|
| afewf34g ⋯ | YES | 30S | KANTO | 2 COHABITANTS |
| 33fdef5d ⋯ | NO | 50S | KINKI | 3 OR MORE COHABITANTS |
| cf2k1w52 ⋯ | YES | 40S | TOHOKU | 3 OR MORE COHABITANTS |
| ab6g9b36 ⋯ | NO | UNDER 10S | KYUSHU | 1 COHABITANT |
| fe741geb ⋯ | NO | OVER 70S | SHIKOKU | 1 COHABITANT |
| ⋮ | ⋮ | ⋮ | ⋮ | ⋮ |

DATA OF COMPANY B

| ANONYMIZED HASH | GENDER |
|---|---|
| afewf34g ⋯ | MALE |
| bf21fcb6 ⋯ | MALE |
| hg42e9ah ⋯ | FEMALE |
| 33fdef5d ⋯ | FEMALE |
| 4e1cc8a8 ⋯ | MALE |
| ⋮ | ⋮ |

## Fig.22

**(BOTH COMPANY A AND COMPANY B) ID ENCRYPTION**

USER DATA OF COMPANY A

| ANONYMIZED HASH | PURCHASED OR NOT | AGE GROUP | RESIDENCE REGION | NUMBER OF COHABITANTS |
|---|---|---|---|---|
| afewf34g ⋯ | YES | 30S | KANTO | 2 COHABITANTS |
| 33fdef5d ⋯ | NO | 50S | KINKI | 3 OR MORE COHABITANTS |
| cf2k1w52 ⋯ | YES | 40S | TOHOKU | 3 OR MORE COHABITANTS |
| ab6g9b36 ⋯ | NO | UNDER 10S | KYUSHU | 1 COHABITANT |
| fe741geb ⋯ | NO | OVER 70S | SHIKOKU | 1 COHABITANT |
| ⋮ | ⋮ | ⋮ | ⋮ | ⋮ |

USER DATA OF COMPANY B

| ANONYMIZED HASH | GENDER |
|---|---|
| afewf34g ⋯ | MALE |
| bf21fcb6 ⋯ | MALE |
| hg42e9ah ⋯ | FEMALE |
| 33fdef5d ⋯ | FEMALE |
| 4e1cc8a8 ⋯ | MALE |
| ⋮ | ⋮ |

ID ENCRYPTION

ID-ENCRYPTED DATA OF COMPANY A

| ENCRYPTED ID | PURCHASED OR NOT | AGE GROUP | RESIDENCE REGION | NUMBER OF COHABITANTS |
|---|---|---|---|---|
| 🔒$^a$ afewf34g ⋯ | YES | 30S | KANTO | 2 COHABITANTS |
| 🔒$^a$ 33fdef5d ⋯ | NO | 50S | KINKI | 3 OR MORE COHABITANTS |
| 🔒$^a$ cf2k1w52 ⋯ | YES | 40S | TOHOKU | 3 OR MORE COHABITANTS |
| 🔒$^a$ ab6g9b36 ⋯ | NO | UNDER 10S | KYUSHU | 1 COHABITANT |
| 🔒$^a$ fe741geb ⋯ | NO | OVER 70S | SHIKOKU | 1 COHABITANT |
| ⋮ | ⋮ | ⋮ | ⋮ | ⋮ |

ID-ENCRYPTED DATA OF COMPANY B

| ENCRYPTED ID | GENDER |
|---|---|
| 🔒$^b$ afewf34g ⋯ | MALE |
| 🔒$^b$ bf21fcb6 ⋯ | MALE |
| 🔒$^b$ hg42e9ah ⋯ | FEMALE |
| 🔒$^b$ 33fdef5d ⋯ | FEMALE |
| 🔒$^b$ 4e1cc8a8 ⋯ | MALE |
| ⋮ | ⋮ |

EP 4 700 685 A1

# Fig.23

(a)

(IN DEVICE OF COMPANY B)
ENCRYPTION OF ATTRIBUTE INFORMATION

ID-ENCRYPTED DATA OF
COMPANY B

| ENCRYPTED ID | GENDER |
|---|---|
| 🔒$^b$ afewf34g ⋯ | MALE |
| 🔒$^b$ bf21fcb6 ⋯ | MALE |
| 🔒$^b$ hg42e9ah ⋯ | FEMALE |
| 🔒$^b$ 33fdef5d ⋯ | FEMALE |
| 🔒$^b$ 4e1cc8a8 ⋯ | MALE |
| ⋮ | ⋮ |

ENCRYPTION OF
ATTRIBUTE
INFORMATION ⟹

ENCRYPTED USER DATA OF
COMPANY B

| ENCRYPTED ID | GENDER |
|---|---|
| 🔒$^b$ afewf34g ⋯ | 🔒$^B$ MALE |
| 🔒$^b$ bf21fcb6 ⋯ | 🔒$^B$ MALE |
| 🔒$^b$ hg42e9ah ⋯ | 🔒$^B$ FEMALE |
| 🔒$^b$ 33fdef5d ⋯ | 🔒$^B$ FEMALE |
| 🔒$^b$ 4e1cc8a8 ⋯ | 🔒$^B$ MALE |
| ⋮ | ⋮ |

(b)

(BOTH COMPANY A AND COMPANY B)
TRANSMISSION/RECEPTION OF ENCRYPTED ID

ENCRYPTED ID OF
COMPANY A

| ENCRYPTED ID |
|---|
| 🔒$^a$ afewf34g ⋯ |
| 🔒$^a$ 33fdef5d ⋯ |
| 🔒$^a$ cf2k1w52 ⋯ |
| 🔒$^a$ ab6g9b36 ⋯ |
| 🔒$^a$ fe741geb ⋯ |
| ⋮ |

TRANSMISSION TO
COMPANY B ⟹

⟸ TRANSMISSION TO
COMPANY A

ENCRYPTED USER DATA OF
COMPANY B

| ENCRYPTED ID | GENDER |
|---|---|
| 🔒$^b$ afewf34g ⋯ | 🔒$^B$ MALE |
| 🔒$^b$ bf21fcb6 ⋯ | 🔒$^B$ MALE |
| 🔒$^b$ hg42e9ah ⋯ | 🔒$^B$ FEMALE |
| 🔒$^b$ 33fdef5d ⋯ | 🔒$^B$ FEMALE |
| 🔒$^b$ 4e1cc8a8 ⋯ | 🔒$^B$ MALE |
| ⋮ | ⋮ |

# *Fig.24*

(BOTH COMPANY A AND COMPANY B) RE-ENCRYPTION OF ID

ENCRYPTED ID OF
COMPANY B

| ENCRYPTED ID |
| --- |
| 🔒$^b$  afewf34g ⋯ |
| 🔒$^b$  bf21fcb6 ⋯ |
| 🔒$^b$  hg42e9ah ⋯ |
| 🔒$^b$  33fdef5d ⋯ |
| 🔒$^b$  4e1cc8a8 ⋯ |
| ⋮ |

ENCRYPTED ID OF
COMPANY A

| ENCRYPTED ID |
| --- |
| 🔒$^a$  afewf34g ⋯ |
| 🔒$^a$  33fdef5d ⋯ |
| 🔒$^a$  cf2k1w52 ⋯ |
| 🔒$^a$  ab6g9b36 ⋯ |
| 🔒$^a$  fe741geb ⋯ |
| ⋮ |

ID ENCRYPTION ⬇

ID ENCRYPTION ⬇

ENCRYPTED ID OF
COMPANY B

| ENCRYPTED ID |
| --- |
| 🔒$^{ba}$  afewf34g ⋯ |
| 🔒$^{ba}$  bf21fcb6 ⋯ |
| 🔒$^{ba}$  hg42e9ah ⋯ |
| 🔒$^{ba}$  33fdef5d ⋯ |
| 🔒$^{ba}$  4e1cc8a8 ⋯ |
| ⋮ |

ENCRYPTED ID OF
COMPANY A

| ENCRYPTED ID |
| --- |
| 🔒$^{ab}$  afewf34g ⋯ |
| 🔒$^{ab}$  33fdef5d ⋯ |
| 🔒$^{ab}$  cf2k1w52 ⋯ |
| 🔒$^{ab}$  ab6g9b36 ⋯ |
| 🔒$^{ab}$  fe741geb ⋯ |
| ⋮ |

※ENCRYPTED ID OF COMPANY A RE-ENCRYPTED IN DEVICE OF
COMPANY B IS TRANSMITTED FROM DEVICE OF COMPANY B TO
DEVICE OF COMPANY A

## Fig.25

(IN DEVICE OF COMPANY A) DATA MATCHING

ENCRYPTED USER DATA OF COMPANY A

| ENCRYPTED ID | PURCHASED OR NOT | AGE GROUP | RESIDENCE REGION | NUMBER OF COHABITANTS |
|---|---|---|---|---|
| 🔒ab afewf34g ⋯ | YES | 30S | KANTO | 2 COHABITANTS |
| 🔒ab 33fdef5d ⋯ | NO | 50S | KINKI | 3 OR MORE COHABITANTS |
| 🔒ab cf2k1w52 ⋯ | YES | 40S | TOHOKU | 3 OR MORE COHABITANTS |
| 🔒ab ab6g9b36 ⋯ | NO | UNDER 10S | KYUSHU | 1 COHABITANT |
| 🔒ab fe741geb ⋯ | NO | OVER 70S | SHIKOKU | 1 COHABITANT |
| ⋮ | ⋮ | ⋮ | ⋮ | ⋮ |

MATCHING ⟺

ENCRYPTED USER DATA OF COMPANY B

| ENCRYPTED ID | GENDER |
|---|---|
| 🔒ba afewf34g ⋯ | 🔒B MALE |
| 🔒ba bf21fcb6 ⋯ | 🔒B MALE |
| 🔒ba hg42e9ah ⋯ | 🔒B FEMALE |
| 🔒ba 33fdef5d ⋯ | 🔒B FEMALE |
| 🔒ba 4e1cc8a8 ⋯ | 🔒B MALE |
| ⋮ | ⋮ |

ENCRYPTED MATCHED DATA

| PURCHASED OR NOT | AGE GROUP | RESIDENCE REGION | NUMBER OF COHABITANTS | GENDER |
|---|---|---|---|---|
| YES | 30S | KANTO | 2 COHABITANTS | 🔒B MALE |
| NO | 50S | KINKI | 3 OR MORE COHABITANTS | 🔒B FEMALE |
| YES | 20S | HOKKAIDO | 1 COHABITANT | 🔒B FEMALE |
| ⋮ | ⋮ | ⋮ | ⋮ | ⋮ |

※ENCRYPTED ID IS DELETED AFTER MATCHING

# Fig.26

## (IN DEVICE OF COMPANY A) AGGREGATION PROCESSING

### ENCRYPTED MATCHED DATA

| PURCHASED OR NOT | AGE GROUP | RESIDENCE REGION | NUMBER OF COHABITANTS | GENDER |
|---|---|---|---|---|
| YES | 30S | KANTO | 2 COHABITANTS | 🔒B MALE |
| NO | 50S | KINKI | 3 OR MORE COHABITANTS | 🔒B FEMALE |
| YES | 20S | HOKKAIDO | 1 COHABITANT | 🔒B FEMALE |
| ⋮ | ⋮ | ⋮ | ⋮ | ⋮ |

AGGREGATION

### ENCRYPTED AGGREGATION DATA(1)

| PURCHASED OR NOT | AGE GROUP | GENDER | AGGREGA-TION DATA |
|---|---|---|---|
| YES | UNDER 10S | 🔒B MALE | 🔒B N1 |
| YES | UNDER 10S | 🔒B FEMALE | 🔒B N2 |
| YES | 20S | 🔒B MALE | 🔒B N3 |
| YES | 20S | 🔒B FEMALE | 🔒B N4 |
| ⋮ | ⋮ | ⋮ | ⋮ |
| YES | OVER 70S | 🔒B FEMALE | 🔒B N14 |

### ENCRYPTED AGGREGATION DATA(2)

| PURCHASED OR NOT | NUMBER OF COHABITANTS | GENDER | AGGREGA-TION DATA |
|---|---|---|---|
| YES | 1 COHABITANT | 🔒B MALE | 🔒B N01 |
| YES | 1 COHABITANT | 🔒B FEMALE | 🔒B N02 |
| YES | 2 COHABITANTS | 🔒B MALE | 🔒B N03 |
| YES | 2 COHABITANTS | 🔒B FEMALE | 🔒B N04 |
| YES | 3 OR MORE COHABITANTS | 🔒B MALE | 🔒B N05 |
| YES | 3 OR MORE COHABITANTS | 🔒B FEMALE | 🔒B N06 |

EP 4 700 685 A1

# Fig.27

(IN DEVICE OF COMPANY A) DISCLOSURE LIMITATION PROCESSING

## ENCRYPTED AGGREGATION DATA (1)

| PURCHASED OR NOT | AGE GROUP | GENDER | AGGREGA-TION DATA | | NOISE |
|---|---|---|---|---|---|
| YES | UNDER 10S | 🔒$^B$ MALE | 🔒$^B$ N1 | + | 🔒$^{B'}$ z1 |
| YES | UNDER 10S | 🔒$^B$ FEMALE | 🔒$^B$ N2 | | 🔒$^{B'}$ z2 |
| YES | 20S | 🔒$^B$ MALE | 🔒$^B$ N3 | | 🔒$^{B'}$ z3 |
| YES | 20S | 🔒$^B$ FEMALE | 🔒$^B$ N4 | | 🔒$^{B'}$ z4 |
| ⋮ | ⋮ | ⋮ | ⋮ | | ⋮ |
| YES | OVER 70S | 🔒$^B$ FEMALE | 🔒$^B$ N14 | | 🔒$^{B'}$ z14 |

## ENCRYPTED AGGREGATION DATA (2)

| PURCHASED OR NOT | NUMBER OF COHABITANTS | GENDER | AGGREGA-TION DATA | | NOISE |
|---|---|---|---|---|---|
| YES | 1 COHABITANT | 🔒$^B$ MALE | 🔒$^B$ N01 | + | 🔒$^{B'}$ z01 |
| YES | 1 COHABITANT | 🔒$^B$ FEMALE | 🔒$^B$ N02 | | 🔒$^{B'}$ z02 |
| YES | 2 COHABITANTS | 🔒$^B$ MALE | 🔒$^B$ N03 | | 🔒$^{B'}$ z03 |
| YES | 2 COHABITANTS | 🔒$^B$ FEMALE | 🔒$^B$ N04 | | 🔒$^{B'}$ z04 |
| YES | 3 OR MORE COHABITANTS | 🔒$^B$ MALE | 🔒$^B$ N05 | | 🔒$^{B'}$ z05 |
| YES | 3 OR MORE COHABITANTS | 🔒$^B$ FEMALE | 🔒$^B$ N06 | | 🔒$^{B'}$ z06 |

## ENCRYPTED STATISTICAL INFORMATION (1)

| PURCHASED OR NOT | AGE GROUP | GENDER | AGGREGA-TION DATA |
|---|---|---|---|
| YES | UNDER 10S | 🔒$^B$ MALE | 🔒$^B$ N1+z1 |
| YES | UNDER 10S | 🔒$^B$ FEMALE | 🔒$^B$ N2+z2 |
| YES | 20S | 🔒$^B$ MALE | 🔒$^B$ N3+z3 |
| YES | 20S | 🔒$^B$ FEMALE | 🔒$^B$ N4+z4 |
| ⋮ | ⋮ | ⋮ | ⋮ |
| YES | OVER 70S | 🔒$^B$ FEMALE | 🔒$^B$ N14+z14 |

## ENCRYPTED STATISTICAL INFORMATION (2)

| PURCHASED OR NOT | NUMBER OF COHABITANTS | GENDER | AGGREGA-TION DATA |
|---|---|---|---|
| YES | 1 COHABITANT | 🔒$^B$ MALE | 🔒$^B$ N01+z01 |
| YES | 1 COHABITANT | 🔒$^B$ FEMALE | 🔒$^B$ N02+z02 |
| YES | 2 COHABITANTS | 🔒$^B$ MALE | 🔒$^B$ N03+z03 |
| YES | 2 COHABITANTS | 🔒$^B$ FEMALE | 🔒$^B$ N04+z04 |
| YES | 3 OR MORE COHABITANTS | 🔒$^B$ MALE | 🔒$^B$ N05+z05 |
| YES | 3 OR MORE COHABITANTS | 🔒$^B$ FEMALE | 🔒$^B$ N06+z06 |

※ENCRYPTED STATISTICAL INFORMATION OBTAINED BY DISCLOSURE LIMITATION PROCESSING IS TRANSMITTED FROM DEVICE OF COMPANY A TO DEVICE OF COMPANY B.

EP 4 700 685 A1

# Fig.28

(IN DEVICE OF COMPANY B) DECRYPTION PROCESSING

ENCRYPTED STATISTICAL INFORMATION (1)

| PURCHASED OR NOT | AGE GROUP | GENDER | AGGREGA-TION DATA |
|---|---|---|---|
| YES | UNDER 10S | 🔒$^B$ MALE | 🔒$^B$ $N1+z1$ |
| YES | UNDER 10S | 🔒$^B$ FEMALE | 🔒$^B$ $N2+z2$ |
| YES | 20S | 🔒$^B$ MALE | 🔒$^B$ $N3+z3$ |
| YES | 20S | 🔒$^B$ FEMALE | 🔒$^B$ $N4+z4$ |
| ⋮ | ⋮ | ⋮ | ⋮ |
| YES | OVER 70S | 🔒$^B$ FEMALE | 🔒$^B$ $N14+z14$ |

ENCRYPTED STATISTICAL INFORMATION (2)

| PURCHASED OR NOT | NUMBER OF COHABITANTS | GENDER | AGGREGA-TION DATA |
|---|---|---|---|
| YES | 1 COHABITANT | 🔒$^B$ MALE | 🔒$^B$ $N01+z01$ |
| YES | 1 COHABITANT | 🔒$^B$ FEMALE | 🔒$^B$ $N02+z02$ |
| YES | 2 COHABITANTS | 🔒$^B$ MALE | 🔒$^B$ $N03+z03$ |
| YES | 2 COHABITANTS | 🔒$^B$ FEMALE | 🔒$^B$ $N04+z04$ |
| YES | 3 OR MORE COHABITANTS | 🔒$^B$ MALE | 🔒$^B$ $N05+z05$ |
| YES | 3 OR MORE COHABITANTS | 🔒$^B$ FEMALE | 🔒$^B$ $N06+z06$ |

DECRYPTION ⬇

STATISTICAL INFORMATION (1)

| PURCHASED OR NOT | AGE GROUP | GENDER | AGGREGA-TION DATA |
|---|---|---|---|
| YES | UNDER 10S | MALE | $N1+z1$ |
| YES | UNDER 10S | FEMALE | $N2+z2$ |
| YES | 20S | MALE | $N3+z3$ |
| YES | 20S | FEMALE | $N4+z4$ |
| ⋮ | ⋮ | ⋮ | ⋮ |
| YES | OVER 70S | FEMALE | $N14+z14$ |

DECRYPTION ⬇

STATISTICAL INFORMATION (2)

| PURCHASED OR NOT | NUMBER OF COHABITANTS | GENDER | AGGREGA-TION DATA |
|---|---|---|---|
| YES | 1 COHABITANT | MALE | $N01+z01$ |
| YES | 1 COHABITANT | FEMALE | $N02+z02$ |
| YES | 2 COHABITANTS | MALE | $N03+z03$ |
| YES | 2 COHABITANTS | FEMALE | $N04+z04$ |
| YES | 3 OR MORE COHABITANTS | MALE | $N05+z05$ |
| YES | 3 OR MORE COHABITANTS | FEMALE | $N06+z06$ |

EP 4 700 685 A1

# Fig.29

FROM SELECTION
UNIT 102    103

X

201

**DETERMINATION UNIT**

**INFORMATION PROVISION UNIT**

11

DATA INPUT UNIT

DATA INPUT UNIT

BASIC AGGREGATION INFORMATION ACQUISITION UNIT — 14A

BASIC AGGREGATION INFORMATION PROVISION UNIT — 14B

ESTIMATION UNIT — 15

EVALUATION UNIT — 16

ALLOCATION DETERMINATION UNIT — 17

TO AGGREGATION EXECUTION UNIT 104

EP 4 700 685 A1

# Fig.30

EP 4 700 685 A1

# Fig.31

EP 4 700 685 A1

EVALUATION OF INFLUENCE OF NOISE (S13)

| AGGREGA-TION | MEDIAN OF ESTIMATED SAMPLE SIZE | INFLUENCE OF NOISE $z$ $V[\frac{n+z}{n}]=\frac{2}{(n\varepsilon)^2}$ |
|---|---|---|
| AGGREGA-TION(1) ITEM $A \times B \times E$ | m1 | $\frac{2}{(m1 \times \varepsilon_{b1})^2}$ |
| AGGREGA-TION(2) ITEM $A \times D \times E$ | m2 | $\frac{2}{(m2 \times \varepsilon_{b2})^2}$ |

DETERMINATION OF PRIVACY BUDGET ALLOCATION (S14)

TOTAL $1.0 = \varepsilon_{total}$

| AGGREGA-TION | MEDIAN OF ESTIMATED SAMPLE SIZE | BUDGET ALLOCA-TION $\varepsilon$ | INFLUENCE OF NOISE $z$ $V[\frac{n+z}{n}]=\frac{2}{(n\varepsilon)^2}$ |
|---|---|---|---|
| AGGREGA-TION(1) ITEM $A \times B \times E$ | m1 | $\varepsilon_{b1}$ | $V_{b1}$ |
| AGGREGA-TION(2) ITEM $A \times D \times E$ | m2 | $\varepsilon_{b2}$ | $V_{b2}$ |

TO EQUALIZE INFLUENCE OF NOISE, ALLOCATE REMAINING PRIVACY BUDGET $\varepsilon_{total}=1.0$ BY WEIGHTING WITH A FUNCTION INVERSELY PROPORTIONAL TO MAGNITUDE OF INFLUENCE OF NOISE

$$\varepsilon_{b1} : \varepsilon_{b2} = \frac{1}{m1} : \frac{1}{m2}$$

INFLUENCE OF NOISE IN AGGREGATIONS(1) TO(2) PROVES TO BE EQUAL $(V_{a1}=V_{a2})$

## Fig.32

EVALUATION OF INFLUENCE OF NOISE（S13）

| AGGREGA-TION | MEDIAN OF ESTIMATED SAMPLE SIZE | INFLUENCE OF NOISE $z$ $V[\frac{n+z}{n}]=\frac{2}{(n\varepsilon)^2}$ |
|---|---|---|
| AGGREGA-TION(1) ITEM $A \times B \times E$ | m1 | $\frac{2}{(m1 \times \varepsilon_{c1})^2}$ |
| AGGREGA-TION(2) ITEM $A \times D \times E$ | m2 | $\frac{2}{(m2 \times \varepsilon_{c2})^2}$ |

DETERMINATION OF PRIVACY BUDGET ALLOCATION（S14）

$\varepsilon_{c1}+\varepsilon_{c2}<\varepsilon_{total}=1.0$

| AGGREGA-TION | MEDIAN OF ESTIMATED SAMPLE SIZE | BUDGET ALLOCA-TION $\varepsilon$ | INFLUENCE OF NOISE $z$ $V[\frac{n+z}{n}]=\frac{2}{(n\varepsilon)^2}$ |
|---|---|---|---|
| AGGREGA-TION(1) ITEM $A \times B \times E$ | m1 | $\varepsilon_{c1}$ | $V_{c1}$ |
| AGGREGA-TION(2) ITEM $A \times D \times E$ | m2 | $\varepsilon_{c2}$ | $V_{c2}$ |

PRIVACY BUDGET ALLOCATION IS DETERMINED SO THAT INFLUENCE OF NOISE FOR EACH COMBINATION SATISFIES REQUIRED LEVEL.

BOTH INFLUENCE OF NOISE $V_{c1}$ AND $V_{c2}$ SATISFY REQUIRED LEVEL.

EP 4 700 685 A1

**Fig.33**

NUMBER OF PRODUCT PURCHASERS（1）

|  | UNDER 10S | 20S | 30S | 40S | 50S | 60S | OVER 70S |
|---|---|---|---|---|---|---|---|
| MALE | $N1+z1$ | $N3+z3$ | $N5+z5$ | $N7+z7$ | $N9+z9$ | $N11+z11$ | $N13+z13$ |
| FEMALE | $N2+z2$ | $N4+z4$ | $N6+z6$ | $N8+z8$ | $N10+z10$ | $N12+z12$ | $N14+z14$ |

NUMBER OF PRODUCT PURCHASERS（2）

|  | 1 COHABITANT | 2 COHABITANTS | 3 OR MORE COHABITANTS |
|---|---|---|---|
| MALE | $N01+z01$ | $N03+z03$ | $N05+z05$ |
| FEMALE | $N02+z02$ | $N04+z04$ | $N06+z06$ |

# Fig.34

NUMBER OF PRODUCT PURCHASERS（a）

|  | 60S |
|---|---|
| MALE | $N11+z11$ |
| FEMALE | $N12+z12$ |

NUMBER OF PRODUCT PURCHASERS（b）

|  | 50S |
|---|---|
| MALE | $N9+z9$ |
| FEMALE | $N10+z10$ |

NUMBER OF PRODUCT PURCHASERS（c）

|  | RESIDENCE IN KANTO |
|---|---|
| MALE | $N30+z30$ |
| FEMALE | $N31+z31$ |

**Fig.35**

# Fig.36

## INTERNATIONAL SEARCH REPORT

| International application No. |
|---|
| **PCT/JP2024/007128** |

| A. | CLASSIFICATION OF SUBJECT MATTER |
|---|---|

*G06Q 30/0201*(2023.01)i
FI:    G06Q30/0201

According to International Patent Classification (IPC) or to both national classification and IPC

| B. | FIELDS SEARCHED |
|---|---|

Minimum documentation searched (classification system followed by classification symbols)

G06Q30/0201

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 野澤一真, 長谷川慶太, 紀伊真昇, 市川敦謙, 中川智尋, 落合桂一, 佐々木一也, 千田浩司, 寺田雅之, 組織横断的なパーソナルデータの結合に適したデータ連携手法の提案と評価, 情報処理学会 シンポジウム コンピュータセキュリティシンポジウム, 2022 [online], 17 October 2022, pp. 333-340, Internet<URL:https://ipsj.ixsq.nii.ac.jp/ej/?action=repository_uri&item_id=223102&file_id=1&file_no=1>, (NOZAWA, Kazuma. HASEGAWA, Keita. KII, Masanobu. ICHIKAWA, Atsunori. NAKAGAWA, Tomohiro. OCHIAI, Keiichi. Sasaki, Kazuya. CHIDA, Koji. TERADA, Masayuki. Proposal and evaluation of Data Aggregation for Cross-Organizational Join of Personal Data. IPSJ Computer Security Symposium 2022.) entire text, all drawings | 1-9 |
| A | 菅和聖, プライバシー保護枠組みの全体像と差分プライバシーの有用性と限界, 情報処理学会 研究報告 コンピュータセキュリティ (CSEC) 2022-CSEC-097 [online]. 12 May 2022, pp. 1-8, ISSN:2188-8655, (KAN, Kazutoshi. Privacy preserving framework and differential privacy.) entire text, all drawings | 1-9 |

✓ Further documents are listed in the continuation of Box C.          ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/007128**

| C. | DOCUMENTS CONSIDERED TO BE RELEVANT | |
|---|---|---|
| Category* | Citation of document, with indication, where appropriate, of the relevant passages | Relevant to claim No. |
| A | JP 2018-139036 A (NOMURA RESEARCH INSTITUTE, LTD.) 06 September 2018 (2018-09-06) entire text, all drawings | 1-9 |

Form PCT/ISA/210 (second sheet) (July 2022)

## INTERNATIONAL SEARCH REPORT
**Information on patent family members**

| International application No. |
| --- |
| **PCT/JP2024/007128** |

| Patent document<br>cited in search report | Publication date<br>(day/month/year) | Patent family member(s) | Publication date<br>(day/month/year) |
| --- | --- | --- | --- |
| JP 2018-139036 A | 06 September 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BKAKRIA ANIS et al.** *Optimal distribution of privacy budget in differential privacy*, 16 October 2018

- **GUOLIN KE et al.** LightGBM: A Highly Efficient Gradient Boosting Decision Tree. *Advances in Neural Information Processing Systems*, 2017, vol. 30